(19) **Europäisches Patentamt / European Patent Office / Office européen des brevets**

(11) **EP 4 529 317 A1**

(12) **EUROPEAN PATENT APPLICATION**
published in accordance with Art. 153(4) EPC

(43) Date of publication:
26.03.2025 Bulletin 2025/13

(21) Application number: 23810822.9

(22) Date of filing: 09.05.2023

(51) International Patent Classification (IPC):
*H04W 72/04* (2023.01)

(52) Cooperative Patent Classification (CPC):
H04L 5/00; H04W 4/02; H04W 72/04;
H04W 72/0446; H04W 72/53

(86) International application number:
PCT/CN2023/093026

(87) International publication number:
WO 2023/226749 (30.11.2023 Gazette 2023/48)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.05.2022 CN 202210588541

(71) Applicant: Huawei Technologies Co., Ltd.
Shenzhen, Guangdong 518129 (CN)

(72) Inventors:
• YU, Yingjie
  Shenzhen, Guangdong 518129 (CN)
• HUANG, Su
  Shenzhen, Guangdong 518129 (CN)
• WANG, Yi
  Shenzhen, Guangdong 518129 (CN)

(74) Representative: Maiwald GmbH
Engineering
Elisenhof
Elisenstrasse 3
80335 München (DE)

(54) **RESOURCE CONFIGURATION METHOD AND COMMUNICATION APPARATUS**

(57) Embodiments of this application provide a resource configuration method and a communication apparatus. According to the method provided in this application, a network device receives first reference SRS resource information from a location management device, and configures, for a to-be-positioned terminal device based on the first reference SRS resource information, a second SRS resource that has at least one overlapping time domain unit with a first SRS resource, where the first SRS resource is related to the first reference SRS resource information. Therefore, when the to-be-positioned terminal device is positioned by measuring an SRS signal sent by a reference terminal device on the first SRS resource and an SRS signal sent by the to-be-positioned terminal device, a phase shift existing in phases measured by the network device on the first SRS resource in time domain and a phase shift existing in phases measured by the network device on the second SRS resource in time domain are the same or similar. This helps eliminate or reduce an error introduced by the phase shift, and improve positioning accuracy.

Method 900

FIG. 9

Processed by Luminess, 75001 PARIS (FR)

**Description**

This application claims priority to Chinese Patent Application No. 202210588541.5, filed with the China National Intellectual Property Administration on May 27, 2022 and entitled "RESOURCE CONFIGURATION METHOD AND COMMUNICATION APPARATUS", which is incorporated herein by reference in its entirety.

**TECHNICAL FIELD**

Embodiments of this application relate to the communication field, and more specifically, to a resource configuration method and a communication apparatus.

**BACKGROUND**

Positioning is an important function in a mobile communication system, and requires the system to provide location information of a user in real time. A 5th generation (5th generation, 5G) communication system has a high-accuracy positioning requirement on the positioning, and requires an outdoor positioning error to be less than 10 meters and an indoor positioning error to be less than 1 meter.

Existing positioning technologies mainly include uplink positioning, downlink positioning, and uplink and downlink positioning. In the uplink positioning, a base station measures a sounding reference signal (sounding reference signal, SRS) sent by a user equipment (user equipment, UE). In the downlink positioning, the UE measures a positioning reference signal (positioning reference signal, PRS) sent by the base station. In the uplink and downlink positioning, the LTE is required to measure the PRS sent by the base station, and the base station is required to measure the SRS sent by the UE.

In actual positioning, because phase shifts existing in phases measured by the base station in time domain are different, a positioning error is caused, and a 5G positioning requirement cannot be met.

**SUMMARY**

Embodiments of this application provide a resource configuration method and a communication apparatus. According to the method provided in this application, a network device may configure a second sounding reference signal (sounding reference signal, SRS) resource for a to-be-positioned terminal device. In this way, positioning accuracy can be improved when the to-be-positioned terminal device is positioned based on an SRS signal sent by the to-be-positioned terminal device on the second SRS resource.

According to a first aspect, a resource configuration method is provided. The method may be performed by a network device, or may be performed by a component (for example, a chip or a circuit) of the network device. This is not limited. For ease of description, an example in which the method is performed by the network device is used below for description.

The method includes: The network device receives first reference SRS resource information from a location management device. The network device configures a second SRS resource for a to-be-positioned terminal device based on the first reference SRS resource information.

Based on the foregoing technical solution, the network device configures the second SRS resource for the to-be-positioned terminal device based on the first reference SRS resource information from the location management device. This helps the network device configure, for the to-be-positioned terminal device, the second SRS resource that has at least one overlapping time domain unit with a first SRS resource, where the first SRS resource is related to the first reference SRS resource information. Further, when the to-be-positioned terminal device is positioned by measuring an SRS signal sent by a reference terminal device on the first SRS resource and an SRS signal sent by the to-be-positioned terminal device on the second SRS resource, a phase shift existing in phases measured by the network device on the first SRS resource in time domain and a phase shift existing in phases measured by the network device on the second SRS resource in time domain are the same or similar. This helps eliminate or reduce an error introduced by the phase shift, and improve positioning accuracy.

For example, the first SRS resource related to the first reference SRS resource information is used by a first reference terminal device to perform transmission of a first SRS signal, and the second SRS resource is used by the to-be-positioned terminal device to perform transmission of a second SRS signal. The first SRS signal and the second SRS signal are for positioning the to-be-positioned terminal device.

For example, the first reference SRS resource information includes one or more of the following: a start symbol location, a quantity of occupied symbols, a sending periodicity and offset, a transmission comb and offset, a cyclic shift, a frequency domain position and offset, or a frequency hopping configuration.

For example, the first reference SRS resource information includes at least the start symbol location, the quantity of occupied symbols, and the sending periodicity and the offset.

Based on the foregoing technical solution, a time domain position of the first SRS resource may be determined based on the first reference SRS resource information, to help the network device configure, for the to-be-positioned terminal device, the second SRS resource that has the at least one overlapping time domain unit with the first SRS resource.

For example, the first reference SRS resource information includes identification information of the first SRS resource.

Based on the foregoing technical solution, the first SRS resource may be determined based on the first reference SRS resource information, to help the network device configure, for the to-be-positioned terminal device, the second SRS resource that has the at least one overlapping time domain unit with the first SRS resource.

For example, the at least one overlapping time domain unit exists between the second SRS resource and the first SRS resource, and the first reference SRS resource information is related to the first SRS resource.

That the at least one overlapping time domain unit exists between the second SRS resource and the first SRS resource includes the following several cases: No offset by a time domain unit exists between the second SRS resource and the first SRS resource; or offset by one time domain unit exists between the second SRS resource and the first SRS resource. That no offset by a time domain unit exists between the second SRS resource and the first SRS resource means: A start symbol location of the first SRS resource is the same as a start symbol location of the second SRS resource, and/or an end symbol location of the first SRS resource is the same as an end symbol location of the second SRS resource. The offset, by a time domain unit, existing between the second SRS resource and the first SRS resource is offset between the start symbol location of the first SRS resource and the start symbol location of the second SRS resource, or offset between the end symbol location of the first SRS resource and the end symbol location of the second SRS resource.

According to a second aspect, a resource configuration method is provided. The method may be performed by a network device, or may be performed by a component (for example, a chip or a circuit) of the network device. This is not limited. For ease of description, an example in which the method is performed by the network device is used below for description.

The method includes: The network device receives first reference SRS resource information from a location management device. The network device configures a second SRS resource for a to-be-positioned terminal device based on the first reference SRS resource information, where at least one overlapping time domain unit exists between the second SRS resource and a first SRS resource, and the first reference SRS resource information is related to the first SRS resource.

Based on the foregoing technical solution, the at least one overlapping time domain unit exists between the first SRS resource and the second SRS resource configured by the network device for the to-be-positioned terminal device based on the first reference SRS resource information from the location management device. Further, when the to-be-positioned terminal device is positioned by measuring an SRS signal sent by a reference terminal device on the first SRS resource and an SRS signal sent by the to-be-positioned terminal device on the second SRS resource, a phase shift existing in phases measured by the network device on the first SRS resource in time domain and a phase shift existing in phases measured by the network device on the second SRS resource in time domain are the same or similar. This helps eliminate or reduce an error introduced by the phase shift, and improve positioning accuracy.

For example, the first SRS resource related to the first reference SRS resource information is used by a first reference terminal device to perform transmission of a first SRS signal, and the second SRS resource is used by the to-be-positioned terminal device to perform transmission of a second SRS signal. The first SRS signal and the second SRS signal are for positioning the to-be-positioned terminal device.

That the at least one overlapping time domain unit exists between the second SRS resource and the first SRS resource includes the following several cases: No offset by a time domain unit exists between the second SRS resource and the first SRS resource; or offset by one time domain unit exists between the second SRS resource and the first SRS resource.

For example, the first reference SRS resource information includes one or more of the following: a start symbol location, a quantity of occupied symbols, a sending periodicity and offset, a transmission comb and offset, a cyclic shift, a frequency domain position and offset, or a frequency hopping configuration.

For example, the first reference SRS resource information includes at least the start symbol location, the quantity of occupied symbols, and the sending periodicity and the offset.

Based on the foregoing technical solution, a time domain position of the first SRS resource may be determined based on the first reference SRS resource information, to help the network device configure, for the to-be-positioned terminal device, the second SRS resource that has the at least one overlapping time domain unit with the first SRS resource.

For example, the first reference SRS resource information includes identification information of the first SRS resource.

Based on the foregoing technical solution, the first SRS resource may be determined based on the first reference SRS resource information, to help the network device configure, for the to-be-positioned terminal device, the second SRS resource that has the at least one overlapping time domain unit with the first SRS resource.

According to a third aspect, a resource configuration method is provided. The method may be performed by a network device, or may be performed by a component (for example, a chip or a circuit) of the network device. This is not limited. For ease of description, an example in which the method is performed by the network device is used below for description.

The method includes: The network device receives first reference SRS resource information from a location management device, where the first reference SRS resource information includes one or more of the following: a start symbol location, a quantity of occupied symbols, a sending periodicity and offset, a transmission comb and offset, a cyclic shift, a frequency domain position and offset, or a frequency hopping configuration. The network device configures a second SRS resource for a to-be-positioned terminal device based on the first reference SRS resource information.

Based on the foregoing technical solution, the network device configures the second SRS resource for the to-be-positioned terminal device based on the first reference SRS resource information from the location management device. This helps the network device configure, for the to-be-positioned terminal device, the second SRS resource that has at least one overlapping time domain unit with a first SRS resource, where the first SRS resource is related to the first reference SRS resource information. Further, when the to-be-positioned terminal device is positioned by measuring an SRS signal sent by a reference terminal device on the first SRS resource and an SRS signal sent by the to-be-positioned terminal device on the second SRS resource, a phase shift existing in phases measured by the network device on the first SRS resource in time domain and a phase shift existing in phases measured by the network device on the second SRS resource in time domain are the same or similar. This helps eliminate or reduce an error introduced by the phase shift, and improve positioning accuracy.

For example, the first SRS resource related to the first reference SRS resource information is used by a first reference terminal device to perform transmission of a first SRS signal, and the second SRS resource is used by the to-be-positioned terminal device to perform transmission of a second SRS signal. The first SRS signal and the second SRS signal are for positioning the to-be-positioned terminal device.

For example, the first reference SRS resource information includes at least the start symbol location, the quantity of occupied symbols, and the sending periodicity and the offset.

Based on the foregoing technical solution, a time domain position of the first SRS resource may be determined based on the first reference SRS resource information, to help the network device configure, for the to-be-positioned terminal device, the second SRS resource that has the at least one overlapping time domain unit with the first SRS resource.

For example, the at least one overlapping time domain unit exists between the first SRS resource and the second SRS resource, and the first reference SRS resource information is related to the first SRS resource.

That the at least one overlapping time domain unit exists between the second SRS resource and the first SRS resource includes the following several cases: No offset by a time domain unit exists between the second SRS resource and the first SRS resource; or offset by one time domain unit exists between the second SRS resource and the first SRS resource.

With reference to the first aspect to the third aspect, in some implementations of the first aspect to the third aspect, the first reference SRS resource information is related to an SRS resource of at least one reference terminal device.

Based on the foregoing technical solution, when the first reference SRS resource information is related to the SRS resource of the at least one reference terminal device, this helps the network device configure, for the to-be-positioned terminal device, the second SRS resource that has the at least one overlapping time domain unit with the SRS resource of the at least one reference terminal device. Further, when the to-be-positioned terminal device is positioned by measuring an SRS signal sent by the at least one reference terminal device and the SRS signal sent by the to-be-positioned terminal device on the second SRS resource, a phase shift existing in phases measured by the network device on the second SRS resource in time domain and a phase shift existing in phases measured by the network device on the SRS resource of the at least one reference terminal device in time domain are the same or similar. This helps eliminate or reduce an error introduced by the phase shift, and improve the positioning accuracy.

For example, the first reference SRS resource information is related to an SRS resource of the first reference terminal device, and the first reference SRS resource information is information about the SRS resource of the first reference terminal device, or the first reference SRS resource information is information obtained based on the SRS resource of the first reference terminal device.

For example, the first reference SRS resource information is related to SRS resources of at least two reference terminal devices, and the first reference SRS resource information is information about the SRS resources of the at least two reference terminal devices, or the first reference SRS resource information is information obtained based on the SRS resources of the at least two reference terminal devices.

With reference to the first aspect to the third aspect, in some implementations of the first aspect to the third aspect, that the network device receives first reference SRS resource information from a location management device includes:

The network device receives a plurality of pieces of reference SRS resource information and priority information of each of the plurality of pieces of reference SRS resource information from the location management device, where the plurality of pieces of SRS resource information include the first reference SRS resource information. The method further includes: The network device sends information about the second SRS resource to the location management device.

With reference to the first aspect to the third aspect, in some implementations of the first aspect to the third aspect, the method further includes: The network device receives first indication information from the location management device, where the first indication information indicates to configure, for the to-be-positioned terminal device, the second SRS resource that completely overlaps the first SRS resource in time domain, or indicates to configure, for the to-be-positioned terminal device, the second SRS resource that partially overlaps the first SRS resource in time domain, where the first reference SRS resource information is related to the first SRS resource. That the network device configures a second SRS resource for a to-be-positioned terminal device based on the first reference SRS resource information includes: The network device configures the second SRS resource for the to-be-positioned terminal device based on the first reference SRS resource information and the first indication information.

Based on the foregoing technical solution, the network device may configure the second SRS resource for the to-be-positioned terminal device based on the first indication information. Therefore, when the to-be-positioned terminal device is positioned by measuring the SRS signal sent by the reference terminal device on the first SRS resource and the SRS signal sent by the to-be-positioned terminal device on the second SRS resource, the phase shift existing in the phases measured by the network device on the first SRS resource in time domain and the phase shift existing in the phases measured by the network device on the second SRS resource in time domain are the same or similar. This helps eliminate or reduce the error introduced by the phase shift, and improve the positioning accuracy.

With reference to the first aspect to the third aspect, in some implementations of the first aspect to the third aspect, the method further includes: The network device receives second indication information from the location management device, where the second indication information indicates offset between the first SRS resource and the second SRS resource, and the first reference SRS resource information is related to the first SRS resource. That the network device configures a second SRS resource for a to-be-positioned terminal device based on the first reference SRS resource information includes: The network device configures the second SRS resource for the to-be-positioned terminal device based on the first reference SRS resource information and the second indication information.

Based on the foregoing technical solution, the network device may configure the second SRS resource for the to-be-positioned terminal device based on the second indication information. Therefore, when the to-be-positioned terminal device is positioned by measuring the SRS signal sent by the reference terminal device on the first SRS resource and the SRS signal sent by the to-be-positioned terminal device on the second SRS resource, the phase shift existing in the phases measured by the network device on the first SRS resource in time domain and the phase shift existing in the phases measured by the network device on the second SRS resource in time domain are the same or similar. This helps eliminate or reduce the error introduced by the phase shift, and improve the positioning accuracy.

With reference to the first aspect to the third aspect, in some implementations of the first aspect to the third aspect, the method further includes: The network device receives third indication information from the location management device, where the third indication information indicates that the first SRS resource is a reference resource, and the first reference SRS resource information is related to the first SRS resource.

Based on the foregoing technical solution, the network device may use the first SRS resource as the reference resource based on the third indication information, and configure the second SRS resource for the to-be-positioned terminal device based on the first SRS resource.

With reference to the first aspect to the third aspect, in some implementations of the first aspect to the third aspect, that the network device receives first reference SRS resource information from a location management device includes: The network device receives reference resource information from the location management device, where the reference resource information includes the first reference SRS resource information.

Based on the foregoing technical solution, the network device may use, as the reference resource, the first SRS resource determined based on the first reference resource information, and configure the second SRS resource for the to-be-positioned terminal device based on the first SRS resource.

According to a fourth aspect, a resource configuration method is provided. The method may be performed by a location management device, or may be performed by a component (for example, a chip or a circuit) of the location management device. This is not limited. For ease of description, an example in which the method is performed by the location management device is used below for description.

The method includes: The location management device sends first reference SRS resource information to a network device, where the first reference SRS resource information is used by the network device to configure a second SRS resource for a to-be-positioned terminal device. The location management device receives information about the second SRS resource from the network device.

For beneficial effects of the method shown in the fourth aspect and the possible implementations of the fourth aspect, refer to the beneficial effects in the first aspect and the possible implementations of the first aspect.

For example, a first SRS resource related to the first reference SRS resource information is used by a first reference terminal device to perform transmission of a first SRS signal, and the second SRS resource is used by the to-be-positioned terminal device to perform transmission of a second SRS signal. The first SRS signal and the second SRS signal are for positioning the to-be-positioned terminal device.

For example, the first reference SRS resource information includes one or more of the following: a start symbol location, a quantity of occupied symbols, a sending periodicity and offset, a transmission comb and offset, a cyclic shift, a frequency domain position and offset, or a frequency hopping configuration.

For example, the first reference SRS resource information includes at least the start symbol location, the quantity of occupied symbols, and the sending periodicity and the offset.

For example, the first reference SRS resource information includes identification information of the first SRS resource.

For example, at least one overlapping time domain unit exists between the second SRS resource and the first SRS resource, and the first reference SRS resource information is related to the first SRS resource.

That the at least one overlapping time domain unit exists between the second SRS resource and the first SRS resource includes the following several cases: No offset by a time domain unit exists between the second SRS resource and the first SRS resource; or offset by one time domain unit exists between the second SRS resource and the first SRS resource.

According to a fifth aspect, a resource configuration method is provided. The method may be performed by a location management device, or may be performed by a component (for example, a chip or a circuit) of the location management device. This is not limited. For ease of description, an example in which the method is performed by the location management device is used below for description.

The method includes: The location management device sends first reference SRS resource information to a network device, where the first reference SRS resource information is used by the network device to configure a second SRS resource for a to-be-positioned terminal device. The location management device receives information about the second SRS resource from the network device, where at least one overlapping time domain unit exists between the second SRS resource and a first SRS resource, and the first reference SRS resource information is related to the first SRS resource.

For beneficial effects of the method shown in the fifth aspect and the possible implementations of the fifth aspect, refer to the beneficial effects in the second aspect and the possible implementations of the second aspect.

For example, the first SRS resource related to the first reference SRS resource information is used by a first reference terminal device to perform transmission of a first SRS signal, and the second SRS resource is used by the to-be-positioned terminal device to perform transmission of a second SRS signal. The first SRS signal and the second SRS signal are for positioning the to-be-positioned terminal device.

That the at least one overlapping time domain unit exists between the second SRS resource and the first SRS resource includes the following several cases: No offset by a time domain unit exists between the second SRS resource and the first SRS resource; or offset by one time domain unit exists between the second SRS resource and the first SRS resource.

For example, the first reference SRS resource information includes one or more of the following: a start symbol location, a quantity of occupied symbols, a sending periodicity and offset, a transmission comb and offset, a cyclic shift, a frequency domain position and offset, or a frequency hopping configuration.

For example, the first reference SRS resource information includes at least the start symbol location, the quantity of occupied symbols, and the sending periodicity and the offset.

For example, the first reference SRS resource information includes identification information of the first SRS resource.

According to a sixth aspect, a resource configuration method is provided. The method may be performed by a location management device, or may be performed by a component (for example, a chip or a circuit) of the location management device. This is not limited. For ease of description, an example in which the method is performed by the location management device is used below for description.

The method includes: The location management device sends first reference SRS resource information to a network device, where the first reference SRS resource information is used by the network device to configure a second SRS resource for a to-be-positioned terminal device, and the first reference SRS resource information includes one or more of the following: a start symbol location, a quantity of occupied symbols, a sending periodicity and offset, a transmission comb and offset, a cyclic shift, a frequency domain position and offset, or a frequency hopping configuration. The location management device receives information about the second SRS resource from the network device.

For beneficial effects of the method shown in the sixth aspect and the possible implementations of the sixth aspect, refer to the beneficial effects in the third aspect and the possible implementations of the third aspect.

For example, a first SRS resource related to the first reference SRS resource information is used by a first reference terminal device to perform transmission of a first SRS signal, and the second SRS resource is used by the to-be-positioned terminal device to perform transmission of a second SRS signal. The first SRS signal and the second SRS signal are for positioning the to-be-positioned terminal device.

For example, the first reference SRS resource information includes at least the start symbol location, the quantity of occupied symbols, and the sending periodicity and the offset.

For example, at least one overlapping time domain unit exists between the first SRS resource and the second SRS resource, and the first reference SRS resource information is related to the first SRS resource.

That the at least one overlapping time domain unit exists between the second SRS resource and the first SRS resource includes the following several cases: No offset by a time domain unit exists between the second SRS resource and the first SRS resource; or offset by one time domain unit exists between the second SRS resource and the first SRS resource.

With reference to the fourth aspect to the sixth aspect, in some implementations of the fourth aspect to the sixth aspect, the first reference SRS resource information is related to an SRS resource of at least one reference terminal device.

For example, the first reference SRS resource information is related to an SRS resource of the first reference terminal device, and the first reference SRS resource information is information about the SRS resource of the first reference terminal device, or the first reference SRS resource information is information obtained based on the SRS resource of the first reference terminal device.

For example, the first reference SRS resource information is related to SRS resources of at least two reference terminal devices, and the first reference SRS resource information is information about the SRS resources of the at least two reference terminal devices, or the first reference SRS resource information is information obtained based on the SRS resources of the at least two reference terminal devices.

With reference to the fourth aspect to the sixth aspect, in some implementations of the fourth aspect to the sixth aspect, that the location management device sends first reference SRS resource information to a network device includes: The location management device sends a plurality of pieces of reference SRS resource information and priority information of each of the plurality of pieces of reference SRS resource information to the network device, where the plurality of pieces of reference SRS resource information include the first reference SRS resource information.

With reference to the fourth aspect to the sixth aspect, in some implementations of the fourth aspect to the sixth aspect, the method further includes: The location management device sends first indication information to the network device, where the first indication information indicates to configure, for the to-be-positioned terminal device, the second SRS resource that completely overlaps the first SRS resource in time domain, or indicates to configure, for the to-be-positioned terminal device, the second SRS resource that partially overlaps the first SRS resource in time domain, where the first reference SRS resource information is related to the first SRS resource.

With reference to the fourth aspect to the sixth aspect, in some implementations of the fourth aspect to the sixth aspect, the method further includes: The location management device sends second indication information to the network device, where the second indication information indicates offset between the first SRS resource and the second SRS resource, and the first reference SRS resource information is related to the first SRS resource.

With reference to the fourth aspect to the sixth aspect, in some implementations of the fourth aspect to the sixth aspect, the method further includes: The location management device sends third indication information to the network device, where the third indication information indicates that the first SRS resource is a reference resource, and the first reference SRS resource information is related to the first SRS resource.

With reference to the fourth aspect to the sixth aspect, in some implementations of the fourth aspect to the sixth aspect, that the location management device sends first reference SRS resource information to a network device includes: The location management device sends reference resource information to the network device, where the reference resource information includes the first reference SRS resource information.

According to a seventh aspect, a positioning method is provided. The method may be performed by a network device, or may be performed by a component (for example, a chip or a circuit) of the network device. This is not limited. For ease of description, an example in which the method is performed by the network device is used below for description.

The method includes: The network device receives a first SRS signal from a reference terminal device on a first SRS resource. The network device receives a second SRS signal from a to-be-positioned terminal device on a second SRS resource, where at least one overlapping time domain unit exists between the second SRS resource and the first SRS resource. The network device sends positioning information to a location management device, where the positioning information is obtained by measuring the first SRS signal and the second SRS signal, and the positioning information is for positioning the to-be-positioned terminal device.

Based on the foregoing technical solution, because the at least one overlapping time domain unit exists between the first SRS resource and the second SRS resource, when the to-be-positioned terminal device is positioned by measuring the first SRS signal and the second SRS signal, a phase shift existing in phases measured by the network device on the first SRS resource in time domain and a phase shift existing in phases measured by the network device on the second SRS resource in time domain are the same or similar. This helps eliminate or reduce an error introduced by the phase shift, and improve positioning accuracy.

For example, that the at least one overlapping time domain unit exists between the second SRS resource and the first SRS resource may include the following two cases: (1) No offset by a time domain unit exists between the second SRS resource and the first SRS resource. (2) Offset by one time domain unit exists between the second SRS resource and the first SRS resource. The offset is offset between a start symbol location of the first SRS resource and a start symbol location of the second SRS resource, or the offset is offset between an end symbol location of the first SRS resource and an end symbol location of the second SRS resource.

For example, the time domain unit is a symbol.

With reference to the seventh aspect, in some implementations of the seventh aspect, the network device is a serving network device of the to-be-positioned terminal device, and the method further includes: The network device receives first reference SRS resource information from the location management device, where the first reference SRS resource information is related to the first SRS resource. The network device configures the second SRS resource for the to-be-positioned terminal device based on the first reference SRS resource information.

Based on the foregoing technical solution, after the serving network device of the to-be-positioned terminal device receives the first reference SRS resource information, this helps the network device to configure, for the to-be-positioned terminal device based on the first reference SRS resource information, the second SRS resource that has the at least one overlapping time domain unit with the first SRS resource.

For example, the first reference SRS resource information includes one or more of the following: a start symbol location, a quantity of occupied symbols, a sending periodicity and offset, a transmission comb and offset, a cyclic shift, a frequency domain position and offset, or a frequency hopping configuration.

For example, the first reference SRS resource information includes at least the start symbol location, the quantity of occupied symbols, and the sending periodicity and the offset.

Based on the foregoing technical solution, a time domain position of the first SRS resource may be determined based on the first reference SRS resource information, to help the network device configure, for the to-be-positioned terminal device, the second SRS resource that has the at least one overlapping time domain unit with the first SRS resource.

For example, the first reference SRS resource information includes identification information of the first SRS resource.

Based on the foregoing technical solution, the first SRS resource may be determined based on the first reference SRS resource information, to help the network device configure, for the to-be-positioned terminal device, the second SRS resource that has the at least one overlapping time domain unit with the first SRS resource.

With reference to the seventh aspect, in some implementations of the seventh aspect, that the network device receives first reference SRS resource information from the location management device includes: The network device receives a plurality of pieces of reference SRS resource information and priority information of each of the plurality of pieces of reference SRS resource information from the location management device, where the plurality of pieces of reference SRS resource information include the first reference SRS resource information. The method further includes: The network device sends information about the second SRS resource to the location management device.

For example, the information about the second SRS resource includes resource configuration information of the second SRS resource and/or identification information of the second SRS resource. For example, the resource configuration information of the second SRS resource includes one or more of the following: a start symbol location, a quantity of occupied symbols, a sending periodicity and offset, a transmission comb and offset, a cyclic shift, a frequency domain position and offset, or a frequency hopping configuration. The identification information of the second SRS resource identifies the second SRS resource.

With reference to the seventh aspect, in some implementations of the seventh aspect, the method further includes: The network device receives first indication information from the location management device, where the first indication information indicates to configure, for the to-be-positioned terminal device, the second SRS resource that completely overlaps the first SRS resource in time domain, or indicates to configure, for the to-be-positioned terminal device, the second SRS resource that partially overlaps the first SRS resource in time domain.

Based on the foregoing technical solution, the network device may configure the second SRS resource for the to-be-positioned terminal device based on the first indication information. Therefore, when the to-be-positioned terminal device is positioned by measuring the first SRS signal and the second SRS signal, the phase shift existing in the phases measured by the network device on the first SRS resource in time domain and the phase shift existing in the phases measured by the network device on the second SRS resource in time domain are the same or similar. This helps eliminate or reduce the error introduced by the phase shift, and improve the positioning accuracy.

With reference to the seventh aspect, in some implementations of the seventh aspect, the network device is a serving network device of the to-be-positioned terminal device and the reference terminal device, and the method further includes: The network device receives the first indication information from the location management device, where the first indication information indicates to configure, for the to-be-positioned terminal device, the second SRS resource that completely overlaps the first SRS resource in time domain, or indicates to configure, for the to-be-positioned terminal device, the second SRS resource that partially overlaps the first SRS resource in time domain. The network device configures the second SRS resource for the to-be-positioned terminal device and the first SRS resource for the reference terminal device based on the first indication information.

Based on the foregoing technical solution, the network device may configure the second SRS resource for the to-be-positioned terminal device and the first SRS resource for the reference terminal device based on the first indication information. Therefore, when the to-be-positioned terminal device is positioned by measuring the first SRS signal and the second SRS signal, the phase shift existing in the phases measured by the network device on the first SRS resource in time domain and the phase shift existing in the phases measured by the network device on the second SRS resource in time domain are the same or similar. This helps eliminate or reduce the error introduced by the phase shift, and improve the positioning accuracy.

With reference to the seventh aspect, in some implementations of the seventh aspect, the method further includes: The network device receives second indication information from the location management device, where the second indication information indicates offset between the first SRS resource and the second SRS resource.

With reference to the seventh aspect, in some implementations of the seventh aspect, the network device is the serving network device of the to-be-positioned terminal device and the reference terminal device, and the method further includes: The network device receives the second indication information from the location management device, where the second indication information indicates the offset between the first SRS resource and the second SRS resource. The network device configures the second SRS resource for the to-be-positioned terminal device and the first SRS resource for the reference terminal device based on the second indication information.

Based on the foregoing technical solution, the network device may configure the second SRS resource for the to-be-positioned terminal device and the first SRS resource for the reference terminal device based on the second indication information. Therefore, when the to-be-positioned terminal device is positioned by measuring the first SRS signal and the second SRS signal, the phase shift existing in the phases measured by the network device on the first SRS resource in time domain and the phase shift existing in the phases measured by the network device on the second SRS resource in time domain are the same or similar. This helps eliminate or reduce the error introduced by the phase shift, and improve the positioning accuracy.

With reference to the seventh aspect, in some implementations of the seventh aspect, the network device is the serving network device of the to-be-positioned terminal device, and the method further includes: The network device sends the information about the second SRS resource to the location management device.

Based on the foregoing technical solution, after receiving the information about the second SRS resource, the location management device may send the information about the second SRS resource to a serving network device of the reference terminal device, so that the serving network device of the reference terminal device may configure the first SRS resource for the reference terminal device based on the information about the second SRS resource.

With reference to the seventh aspect, in some implementations of the seventh aspect, the network device is the serving network device of the reference terminal device, and the method further includes: The network device receives the information about the second SRS resource from the location management device. The network device configures the first SRS resource for the reference terminal device based on the information about the second SRS resource.

Based on the foregoing technical solution, after the serving network device of the reference terminal device receives the information about the second SRS resource, the serving network device of the reference terminal device may configure the first SRS resource for the reference terminal device based on the information about the second SRS resource.

According to an eighth aspect, a positioning method is provided. The method may be performed by a location management device, or may be performed by a component (for example, a chip or a circuit) of the location management device. This is not limited. For ease of description, an example in which the method is performed by the location management device is used below for description.

The method includes: The location management device receives positioning information from a network device, where the positioning information is obtained by measuring a first SRS signal and a second SRS signal, the first SRS signal is an SRS signal that is from a reference terminal device and that is received by the network device on a first SRS resource, the second SRS signal is an SRS signal that is from a to-be-positioned terminal device and that is received by the network device on a second SRS resource, and at least one overlapping time domain unit exists between the second SRS resource and the first SRS resource. The location management device positions the to-be-positioned terminal device based on the positioning information.

Based on the foregoing technical solution, because the at least one overlapping time domain unit exists between the first SRS resource and the second SRS resource, when the to-be-positioned terminal device is positioned by measuring the first SRS signal and the second SRS signal, a phase shift existing in phases measured by the network device on the first SRS resource in time domain and a phase shift existing in phases measured by the network device on the second SRS resource in time domain are the same or similar. This helps eliminate or reduce an error introduced by the phase shift, and improve positioning accuracy.

For example, that the at least one overlapping time domain unit exists between the second SRS resource and the first SRS resource may include the following two cases: (1) No offset by a time domain unit exists between the second SRS resource and the first SRS resource. (2) Offset by one time domain unit exists between the second SRS resource and the first SRS resource.

For example, the time domain unit is a symbol.

With reference to the eighth aspect, in some implementations of the eighth aspect, the network device is a serving network device of the to-be-positioned terminal device, and the method further includes: The location management device sends first reference SRS resource information to the network device, where the first reference SRS resource information is related to the first SRS resource.

Based on the foregoing technical solution, after the serving network device of the to-be-positioned terminal device receives the first reference SRS resource information, this helps the second SRS resource that has the at least one overlapping time domain unit with the first SRS resource to be configured for the to-be-positioned terminal device based on the first reference SRS resource information.

For example, the first reference SRS resource information includes one or more of the following: a start symbol location, a quantity of occupied symbols, a sending periodicity and offset, a transmission comb and offset, a cyclic shift, a frequency domain position and offset, or a frequency hopping configuration.

For example, the first reference SRS resource information includes at least the start symbol location, the quantity of occupied symbols, and the sending periodicity and the offset.

Based on the foregoing technical solution, a time domain position of the first SRS resource may be determined based on the first reference SRS resource information, to help the network device configure, for the to-be-positioned terminal device, the second SRS resource that has the at least one overlapping time domain unit with the first SRS resource.

For example, the first reference SRS resource information includes identification information of the first SRS resource.

Based on the foregoing technical solution, the first SRS resource may be determined based on the first reference SRS resource information, to help the network device configure, for the to-be-positioned terminal device, the second SRS resource that has the at least one overlapping time domain unit with the first SRS resource.

With reference to the eighth aspect, in some implementations of the eighth aspect, that the location management device sends first reference SRS resource information to the network device includes: The location management device sends a plurality of pieces of reference SRS resource information and priority information of each of the plurality of pieces of reference SRS resource information to the network device, where the plurality of pieces of reference SRS resource information include the first reference SRS resource information. The method further includes: The location management device receives information about the second SRS resource from the network device.

With reference to the eighth aspect, in some implementations of the eighth aspect, the network device is the serving network device of the to-be-positioned terminal device, and the method further includes: The location management device sends first indication information to the network device, where the first indication information indicates to configure, for the to-be-positioned terminal device, the second SRS resource that completely overlaps the first SRS resource in time domain, or indicates to configure, for the to-be-positioned terminal device, the second SRS resource that partially overlaps the first SRS resource in time domain.

Based on the foregoing technical solution, the serving network device of the to-be-positioned terminal device may configure the second SRS resource for the to-be-positioned terminal device based on the first indication information. Therefore, when the to-be-positioned terminal device is positioned by measuring the first SRS signal and the second SRS signal, the phase shift existing in the phase measured by the serving network device of the to-be-positioned terminal device on the first SRS resource in time domain and the phase shift existing in the phase measured by the serving network device of the to-be-positioned terminal device on the second SRS resource in time domain are the same or similar. This helps eliminate or reduce the error introduced by the phase shift, and improve the positioning accuracy.

With reference to the eighth aspect, in some implementations of the eighth aspect, the network device is the serving network device of the to-be-positioned terminal device, and the method further includes: The location management device sends second indication information to the network device, where the second indication information indicates offset between the first SRS resource and the second SRS resource.

Based on the foregoing technical solution, the serving network device of the to-be-positioned terminal device may configure the second SRS resource for the to-be-positioned terminal device based on the second indication information. Therefore, when the to-be-positioned terminal device is positioned by measuring the first SRS signal and the second SRS signal, the phase shift existing in the phase measured by the serving network device of the to-be-positioned terminal device on the first SRS resource in time domain and the phase shift existing in the phase measured by the serving network device of the to-be-positioned terminal device on the second SRS resource in time domain are the same or similar. This helps eliminate or reduce the error introduced by the phase shift, and improve the positioning accuracy.

With reference to the eighth aspect, in some implementations of the eighth aspect, the network device is the serving network device of the to-be-positioned terminal device, and the method further includes: The location management device receives the information about the second SRS resource from the network device. The location management device sends the information about the second SRS resource to a serving network device of the reference terminal device, where the information about the second SRS resource is for configuring the first SRS resource for the reference terminal device.

Based on the foregoing technical solution, the location management device sends the information about the second SRS resource to the serving network device of the reference terminal device, so that the serving network device of the reference terminal device may configure the first SRS resource for the reference terminal device based on the information about the second SRS resource.

According to a ninth aspect, a positioning method is provided. The method may be performed by a to-be-positioned terminal device, or may be performed by a component (for example, a chip or a circuit) of the to-be-positioned terminal device. This is not limited. For ease of description, an example in which the method is performed by the to-be-positioned terminal device is used below for description.

The method includes: The to-be-positioned terminal device receives resource configuration information of a second SRS resource from a network device, where at least one overlapping time domain unit exists between a first SRS resource and the second SRS resource, and the first SRS resource is used by a reference terminal device to perform transmission of a first SRS signal. The to-be-positioned terminal device sends a second SRS signal to the network device on the second SRS resource.

Based on the foregoing technical solution, the to-be-positioned terminal device sends the second SRS signal on the second SRS resource. Because the at least one overlapping time domain unit exists between the first SRS resource and the second SRS resource, when the to-be-positioned terminal device is positioned by measuring the first SRS signal and the second SRS signal, a phase shift existing in phases measured by the network device on the first SRS resource in time domain and a phase shift existing in phases measured by the network device on the second SRS resource in time domain are the same or similar. This helps eliminate or reduce an error introduced by the phase shift, and improve positioning accuracy.

For example, that the at least one overlapping time domain unit exists between the second SRS resource and the first SRS resource may include the following two cases: (1) No offset by a time domain unit exists between the second SRS resource and the first SRS resource. (2) Offset by one time domain unit exists between the second SRS resource and the first SRS resource.

For example, the time domain unit is a symbol.

According to a tenth aspect, a communication apparatus is provided. The communication apparatus includes a transceiver unit and a processing unit. The transceiver unit is configured to receive first reference SRS resource information from a location management device. The processing unit is configured to configure a second SRS resource for a to-be-positioned terminal device based on the first reference SRS resource information.

With reference to the tenth aspect, in some implementations of the tenth aspect, the first reference SRS resource information includes one or more of the following: a start symbol location, a quantity of occupied symbols, a sending periodicity and offset, a transmission comb and offset, a cyclic shift, a frequency domain position and offset, or a frequency hopping configuration.

With reference to the tenth aspect, in some implementations of the tenth aspect, the first reference SRS resource information includes at least the start symbol location, the quantity of occupied symbols, and the sending periodicity and the offset.

With reference to the tenth aspect, in some implementations of the tenth aspect, the first reference SRS resource information includes identification information of a first SRS resource.

With reference to the tenth aspect, in some implementations of the tenth aspect, at least one overlapping time domain unit exists between the second SRS resource and the first SRS resource, and the first reference SRS resource information is related to the first SRS resource.

According to an eleventh aspect, a communication apparatus is provided. The communication apparatus includes a transceiver unit and a processing unit. The transceiver unit is configured to receive first reference SRS resource information from a location management device. The processing unit is configured to configure a second SRS resource for a to-be-positioned terminal device based on the first reference SRS resource information, where at least one overlapping time domain unit exists between the second SRS resource and a first SRS resource, and the first reference SRS resource information is related to the first SRS resource.

With reference to the eleventh aspect, in some implementations of the eleventh aspect, the first reference SRS resource information includes one or more of the following: a start symbol location, a quantity of occupied symbols, a sending periodicity and offset, a transmission comb and offset, a cyclic shift, a frequency domain position and offset, or a frequency hopping configuration.

With reference to the eleventh aspect, in some implementations of the eleventh aspect, the first reference SRS resource information includes at least the start symbol location, the quantity of occupied symbols, and the sending periodicity and the offset.

With reference to the eleventh aspect, in some implementations of the eleventh aspect, the first reference SRS resource information includes identification information of the first SRS resource.

According to a twelfth aspect, a communication apparatus is provided. The communication apparatus includes a transceiver unit and a processing unit. The transceiver unit is configured to receive first reference SRS resource information from a location management device, where the first reference SRS resource information includes one or more of the following: a start symbol location, a quantity of occupied symbols, a sending periodicity and offset, a transmission comb and offset, a cyclic shift, a frequency domain position and offset, or a frequency hopping configuration. The processing unit is configured to configure a second SRS resource for a to-be-positioned terminal device based on the first reference SRS resource information.

With reference to the twelfth aspect, in some implementations of the twelfth aspect, the first reference SRS resource information includes at least the start symbol location, the quantity of occupied symbols, and the sending periodicity and the offset.

With reference to the twelfth aspect, in some implementations of the twelfth aspect, the at least one overlapping time domain unit exists between a first SRS resource and the second SRS resource, and the first reference SRS resource information is related to the first SRS resource.

With reference to the tenth aspect to the twelfth aspect, in some implementations of the tenth aspect to the twelfth aspect, no offset by a time domain unit exists between the second SRS resource and the first SRS resource, or offset by one time domain unit exists between the second SRS resource and the first SRS resource.

With reference to the tenth aspect to the twelfth aspect, in some implementations of the tenth aspect to the twelfth aspect, the offset is offset between a start symbol location of the first SRS resource and a start symbol location of the second SRS resource, or the offset is offset between an end symbol location of the first SRS resource and an end symbol location of the second SRS resource.

With reference to the tenth aspect to the twelfth aspect, in some implementations of the tenth aspect to the twelfth aspect, the first reference SRS resource information is related to an SRS resource of at least one reference terminal device.

With reference to the tenth aspect to the twelfth aspect, in some implementations of the tenth aspect to the twelfth aspect, the first reference SRS resource information is related to an SRS resource of a first reference terminal device, and the first reference SRS resource information is information about the SRS resource of the first reference terminal device, or the first reference SRS resource information is information obtained based on the SRS resource of the first reference terminal device.

With reference to the tenth aspect to the twelfth aspect, in some implementations of the tenth aspect to the twelfth aspect, the first reference SRS resource information is related to SRS resources of at least two reference terminal devices, and the first reference SRS resource information is information about the SRS resources of the at least two reference terminal devices, or the first reference SRS resource information is information obtained based on the SRS resources of the at least two reference terminal devices.

With reference to the tenth aspect to the twelfth aspect, in some implementations of the tenth aspect to the twelfth aspect, the transceiver unit is specifically configured to receive a plurality of pieces of reference SRS resource information and priority information of each of the plurality of pieces of reference SRS resource information from the location management device, where the plurality of pieces of reference SRS resource information include the first reference SRS resource information. The transceiver unit is further configured to send information about the second SRS resource to the location management device.

With reference to the tenth aspect to the twelfth aspect, in some implementations of the tenth aspect to the twelfth aspect, the transceiver unit is further configured to receive first indication information from the location management device, where the first indication information indicates to configure, for the to-be-positioned terminal device, the second SRS resource that completely overlaps the first SRS resource in time domain, or indicates to configure, for the to-be-positioned terminal device, the second SRS resource that partially overlaps the first SRS resource in time domain, where the first reference SRS resource information is related to the first SRS resource. The processing unit is specifically configured to configure the second SRS resource for the to-be-positioned terminal device based on the first reference SRS resource information and the first indication information.

With reference to the tenth aspect to the twelfth aspect, in some implementations of the tenth aspect to the twelfth aspect, the transceiver unit is further configured to receive second indication information from the location management device, where the second indication information indicates offset between the first SRS resource and the second SRS resource, and the first reference SRS resource information is related to the first SRS resource. The processing unit is specifically configured to configure the second SRS resource for the to-be-positioned terminal device based on the first reference SRS resource information and the second indication information.

With reference to the tenth aspect to the twelfth aspect, in some implementations of the tenth aspect to the twelfth aspect, the transceiver unit is further configured to receive third indication information from the location management device, where the third indication information indicates that the first SRS resource is a reference resource, and the first reference SRS resource information is related to the first SRS resource.

With reference to the tenth aspect to the twelfth aspect, in some implementations of the tenth aspect to the twelfth aspect, the transceiver unit is specifically configured to receive reference resource information from the location management device, where the reference resource information includes the first reference SRS resource information.

According to a thirteenth aspect, a communication apparatus is provided. The communication apparatus includes a transceiver unit. The transceiver unit is configured to send first reference SRS resource information to a network device, where the first reference SRS resource information is used by the network device to configure a second SRS resource for a to-be-positioned terminal device. The transceiver unit is further configured to receive information about the second SRS resource from the network device.

With reference to the thirteenth aspect, in some implementations of the thirteenth aspect, the first reference SRS resource information includes one or more of the following: a start symbol location, a quantity of occupied symbols, a sending periodicity and offset, a transmission comb and offset, a cyclic shift, a frequency domain position and offset, or a frequency hopping configuration.

With reference to the thirteenth aspect, in some implementations of the thirteenth aspect, the first reference SRS resource information includes at least the start symbol location, the quantity of occupied symbols, and the sending periodicity and the offset.

With reference to the thirteenth aspect, in some implementations of the thirteenth aspect, the first reference SRS resource information includes identification information of a first SRS resource.

With reference to the thirteenth aspect, in some implementations of the thirteenth aspect, at least one overlapping time domain unit exists between the second SRS resource and the first SRS resource, and the first reference SRS resource information is related to the first SRS resource.

According to a fourteenth aspect, a communication apparatus is provided. The communication apparatus includes a transceiver unit. The transceiver unit is configured to send first reference SRS resource information to a network device, where the first reference SRS resource information is used by the network device to configure a second SRS resource for a to-be-positioned terminal device. The transceiver unit is further configured to receive information about the second SRS resource from the network device, where at least one overlapping time domain unit exists between the second SRS resource and a first SRS resource, and the first reference SRS resource information is related to the first SRS resource.

With reference to the fourteenth aspect, in some implementations of the fourteenth aspect, the first reference SRS resource information includes one or more of the following: a start symbol location, a quantity of occupied symbols, a sending periodicity and offset, a transmission comb and offset, a cyclic shift, a frequency domain position and offset, or a frequency hopping configuration.

With reference to the fourteenth aspect, in some implementations of the fourteenth aspect, the first reference SRS resource information includes at least the start symbol location, the quantity of occupied symbols, and the sending periodicity and the offset.

With reference to the fourteenth aspect, in some implementations of the fourteenth aspect, the first reference SRS resource information includes identification information of the first SRS resource.

According to a fifteenth aspect, a communication apparatus is provided. The communication apparatus includes a transceiver unit. The transceiver unit is configured to send first reference SRS resource information to a network device, where the first reference SRS resource information is used by the network device to configure a second SRS resource for a to-be-positioned terminal device, and the first reference SRS resource information includes one or more of the following: a start symbol location, a quantity of occupied symbols, a sending periodicity and offset, a transmission comb and offset, a cyclic shift, a frequency domain position and offset, or a frequency hopping configuration. The transceiver unit is further configured to receive information about the second SRS resource from the network device.

With reference to the fifteenth aspect, in some implementations of the fifteenth aspect, the first reference SRS resource information includes at least the start symbol location, the quantity of occupied symbols, and the sending periodicity and the offset.

With reference to the fifteenth aspect, in some implementations of the fifteenth aspect, at least one overlapping time domain unit exists between a first SRS resource and the second SRS resource, and the first reference SRS resource information is related to the first SRS resource.

With reference to the thirteenth aspect to the fifteenth aspect, in some implementations of the thirteenth aspect to the fifteenth aspect, no offset by a time domain unit exists between the second SRS resource and the first SRS resource, or offset by one time domain unit exists between the second SRS resource and the first SRS resource.

With reference to the thirteenth aspect to the fifteenth aspect, in some implementations of the thirteenth aspect to the fifteenth aspect, the offset is offset between a start symbol location of the first SRS resource and a start symbol location of the second SRS resource, or the offset is offset between an end symbol location of the first SRS resource and an end symbol location of the second SRS resource.

With reference to the thirteenth aspect to the fifteenth aspect, in some implementations of the thirteenth aspect to the fifteenth aspect, the first reference SRS resource information is related to an SRS resource of at least one reference terminal device.

With reference to the thirteenth aspect to the fifteenth aspect, in some implementations of the thirteenth aspect to the fifteenth aspect, the first reference SRS resource information is related to an SRS resource of a first reference terminal device, and the first reference SRS resource information is information about the SRS resource of the first reference terminal device, or the first reference SRS resource information is information obtained based on the SRS resource of the first reference terminal device.

With reference to the thirteenth aspect to the fifteenth aspect, in some implementations of the thirteenth aspect to the fifteenth aspect, the first reference SRS resource information is related to SRS resources of at least two reference terminal devices, and the first reference SRS resource information is information about the SRS resources of the at least two reference terminal devices, or the first reference SRS resource information is information obtained based on the SRS resources of the at least two reference terminal devices.

With reference to the thirteenth aspect to the fifteenth aspect, in some implementations of the thirteenth aspect to the fifteenth aspect, the transceiver unit is specifically configured to send a plurality of pieces of reference SRS resource information and priority information of each of the plurality of pieces of reference SRS resource information to the network device, where the plurality of pieces of reference SRS resource information include the first reference SRS resource information.

With reference to the thirteenth aspect to the fifteenth aspect, in some implementations of the thirteenth aspect to the fifteenth aspect, the transceiver unit is further configured to send first indication information to the network device, where the first indication information indicates to configure, for the to-be-positioned terminal device, the second SRS resource that completely overlaps the first SRS resource in time domain, or indicates to configure, for the to-be-positioned terminal device, the second SRS resource that partially overlaps the first SRS resource in time domain, where the first reference SRS resource information is related to the first SRS resource.

With reference to the thirteenth aspect to the fifteenth aspect, in some implementations of the thirteenth aspect to the fifteenth aspect, the transceiver unit is further configured to send second indication information to the network device, where the second indication information indicates offset between the first SRS resource and the second SRS resource, and the first reference SRS resource information is related to the first SRS resource.

With reference to the thirteenth aspect to the fifteenth aspect, in some implementations of the thirteenth aspect to the fifteenth aspect, the transceiver unit is further configured to send third indication information to the network device, where the third indication information indicates that the first SRS resource is a reference resource, and the first reference SRS resource information is related to the first SRS resource.

With reference to the thirteenth aspect to the fifteenth aspect, in some implementations of the thirteenth aspect to the fifteenth aspect, the transceiver unit is specifically configured to send reference resource information to the network device, where the reference resource information includes the first reference SRS resource information.

According to a sixteenth aspect, a communication apparatus is provided. The communication apparatus includes a transceiver unit. The transceiver unit is configured to receive a first SRS signal from a reference terminal device on a first SRS resource. The transceiver unit is further configured to receive a second SRS signal from a to-be-positioned terminal device on a second SRS resource, where at least one overlapping time domain unit exists between the second SRS resource and the first SRS resource. The transceiver unit is further configured to send positioning information to a location management device, where the positioning information is obtained by measuring the first SRS signal and the second SRS signal, and the positioning information is for positioning the to-be-positioned terminal device.

With reference to the sixteenth aspect, in some implementations of the sixteenth aspect, no offset by a time domain unit exists between the second SRS resource and the first SRS resource, or offset by one time domain unit exists between the second SRS resource and the first SRS resource.

With reference to the sixteenth aspect, in some implementations of the sixteenth aspect, the offset is offset between a start symbol location of the first SRS resource and a start symbol location of the second SRS resource, or the offset is offset between an end symbol location of the first SRS resource and an end symbol location of the second SRS resource.

With reference to the sixteenth aspect, in some implementations of the sixteenth aspect, the communication apparatus further includes a processing unit. The transceiver unit is further configured to receive first reference SRS resource information from the location management device, where the first reference SRS resource information is related to the first SRS resource. The processing unit is configured to configure the second SRS resource for the to-be-positioned terminal device based on the first reference SRS resource information.

With reference to the sixteenth aspect, in some implementations of the sixteenth aspect, the first reference SRS resource information includes one or more of the following: a start symbol location, a quantity of occupied symbols, a sending periodicity and offset, a transmission comb and offset, a cyclic shift, a frequency domain position and offset, or a frequency hopping configuration.

With reference to the sixteenth aspect, in some implementations of the sixteenth aspect, the first reference SRS resource information includes at least the start symbol location, the quantity of occupied symbols, and the sending periodicity and the offset.

With reference to the sixteenth aspect, in some implementations of the sixteenth aspect, the first reference SRS resource information includes identification information of the first SRS resource.

With reference to the sixteenth aspect, in some implementations of the sixteenth aspect, the transceiver unit is specifically configured to receive a plurality of pieces of reference SRS resource information and priority information of each of the plurality of pieces of reference SRS resource information from the location management device, where the plurality of pieces of reference SRS resource information include the first reference SRS resource information. The transceiver unit is further configured to send information about the second SRS resource to the location management device.

With reference to the sixteenth aspect, in some implementations of the sixteenth aspect, the transceiver unit is further configured to receive first indication information from the location management device, where the first indication information indicates to configure, for the to-be-positioned terminal device, the second SRS resource that completely overlaps the first SRS resource in time domain, or indicates to configure, for the to-be-positioned terminal device, the second SRS resource that partially overlaps the first SRS resource in time domain.

With reference to the sixteenth aspect, in some implementations of the sixteenth aspect, the communication apparatus further includes the processing unit. The transceiver unit is further configured to receive the first indication information from the location management device, where the first indication information indicates to configure, for the to-be-positioned terminal device, the second SRS resource that completely overlaps the first SRS resource in time domain, or indicates to configure, for the to-be-positioned terminal device, the second SRS resource that partially overlaps the first SRS resource in time domain. The processing unit is further configured to configure the second SRS resource for the to-be-positioned terminal device and the first SRS resource for the reference terminal device based on the first indication information.

With reference to the sixteenth aspect, in some implementations of the sixteenth aspect, the transceiver unit is further configured to receive second indication information from the location management device, where the second indication information indicates offset between the first SRS resource and the second SRS resource.

With reference to the sixteenth aspect, in some implementations of the sixteenth aspect, the communication apparatus further includes the processing unit. The transceiver unit is further configured to receive the second indication information from the location management device, where the second indication information indicates the offset between the first SRS resource and the second SRS resource. The processing unit is configured to configure the second SRS resource for the to-be-positioned terminal device and the first SRS resource for the reference terminal device based on the second indication information.

With reference to the sixteenth aspect, in some implementations of the sixteenth aspect, the transceiver unit is further configured to send the information about the second SRS resource to the location management device.

With reference to the sixteenth aspect, in some implementations of the sixteenth aspect, the transceiver unit is further configured to receive the information about the second SRS resource from the location management device. The network device configures the first SRS resource for the reference terminal device based on the information about the second SRS resource.

According to a seventeenth aspect, a communication apparatus is provided. The communication apparatus includes a transceiver unit and a processing unit. The transceiver unit is configured to receive positioning information from a network device, where the positioning information is obtained by measuring a first SRS signal and a second SRS signal, the first SRS signal is an SRS signal that is from a reference terminal device and that is received by the network device on a first SRS resource, the second SRS signal is an SRS signal that is from a to-be-positioned terminal device and that is received by the network device on a second SRS resource, and at least one overlapping time domain unit exists between the second SRS resource and the first SRS resource. The processing unit is configured to position the to-be-positioned terminal device based on the positioning information.

With reference to the seventeenth aspect, in some implementations of the seventeenth aspect, no offset by a time domain unit exists between the second SRS resource and the first SRS resource, or offset by one time domain unit exists between the second SRS resource and the first SRS resource.

With reference to the seventeenth aspect, in some implementations of the seventeenth aspect, the offset is offset between a start symbol location of the first SRS resource and a start symbol location of the second SRS resource, or the offset is offset between an end symbol location of the first SRS resource and an end symbol location of the second SRS resource.

With reference to the seventeenth aspect, in some implementations of the seventeenth aspect, the transceiver unit is further configured to send first reference SRS resource information to the network device, where the first reference SRS resource information is related to the first SRS resource.

With reference to the seventeenth aspect, in some implementations of the seventeenth aspect, the transceiver unit is specifically configured to send a plurality of pieces of reference SRS resource information and priority information of each of the plurality of pieces of reference SRS resource information to the network device. The transceiver unit is further configured to receive information about the second SRS resource from the network device.

With reference to the seventeenth aspect, in some implementations of the seventeenth aspect, the transceiver unit is further configured to send first indication information to the network device, where the first indication information indicates to configure, for the to-be-positioned terminal device, the second SRS resource that completely overlaps the first SRS resource in time domain, or indicates to configure, for the to-be-positioned terminal device, the second SRS resource that partially overlaps the first SRS resource in time domain.

With reference to the seventeenth aspect, in some implementations of the seventeenth aspect, the transceiver unit is further configured to send second indication information to the network device, where the second indication information indicates offset between the first SRS resource and the second SRS resource.

With reference to the seventeenth aspect, in some implementations of the seventeenth aspect, the network device is a serving network device of the to-be-positioned terminal device, and the transceiver unit is further configured to receive the information about the second SRS resource from the network device. The transceiver unit is further configured to send the information about the second SRS resource to a serving network device of the reference terminal device, where the information about the second SRS resource is for configuring the first SRS resource for the reference terminal device.

According to an eighteenth aspect, a communication apparatus is provided. The communication apparatus includes a transceiver unit. The transceiver unit is configured to receive resource configuration information of a second SRS resource from a network device, where at least one overlapping time domain unit exists between a first SRS resource and the second SRS resource, and the first SRS resource is used by a reference terminal device to perform transmission of a first SRS signal. The transceiver unit is further configured to send a second SRS signal to the network device on the second SRS resource.

According to a nineteenth aspect, an apparatus is provided, including a processor. The processor is coupled to a memory, and may be configured to execute instructions in the memory, to implement the method in any one of the first aspect and the possible implementations of the first aspect, implement the method in any one of the second aspect and the possible implementations of the second aspect, implement the method in any one of the third aspect and the possible implementations of the third aspect, or implement the method in any one of the seventh aspect and the possible implementations of the seventh aspect. Optionally, the apparatus further includes the memory. Optionally, the apparatus further includes a communication interface, and the processor is coupled to the communication interface.

In an implementation, the apparatus is a network device. When the apparatus is the network device, the communication interface may be a transceiver or an input/output interface.

In another implementation, the apparatus is a chip or a chip system configured in a network device. When the apparatus is the chip configured in the network device, the communication interface may be an input/output interface. The chip system includes at least one chip, and may further include another circuit structure and/or a discrete device.

Optionally, the transceiver may be a transceiver circuit. Optionally, the input/output interface may be an input/output circuit.

According to a twentieth aspect, a communication apparatus is provided, including a processor. The processor is coupled to a memory, and may be configured to execute instructions in the memory, to implement the method in any one of the fourth aspect and the possible implementations of the fourth aspect, implement the method in any one of the fifth aspect and the possible implementations of the fifth aspect, implement the method in any one of the sixth aspect and the possible implementations of the sixth aspect, or implement the method in any one of the eighth aspect and the possible implementations of the eighth aspect. Optionally, the apparatus further includes the memory. Optionally, the apparatus further includes a communication interface, and the processor is coupled to the communication interface.

In an implementation, the apparatus is a location management device. When the apparatus is the location management device, the communication interface may be a transceiver or an input/output interface.

In another implementation, the apparatus is a chip or a chip system configured in the location management device. When the apparatus is the chip configured in the location management device, the communication interface may be an input/output interface. The chip system includes at least one chip, and may further include another circuit structure and/or a discrete device.

Optionally, the transceiver may be a transceiver circuit. Optionally, the input/output interface may be an input/output circuit.

According to a twenty-first aspect, a communication apparatus is provided, including a processor. The processor is coupled to a memory, and may be configured to execute instructions in the memory, to implement the method according to any one of the ninth aspect and the possible implementations of the ninth aspect. Optionally, the apparatus further includes the memory. Optionally, the apparatus further includes a communication interface, and the processor is coupled to the communication interface.

In an implementation, the apparatus is a terminal device. When the apparatus is the terminal device, the communication interface may be a transceiver or an input/output interface.

In another implementation, the apparatus is a chip or a chip system configured in a terminal device. When the apparatus is the chip configured in the terminal device, the communication interface may be an input/output interface. The chip system includes at least one chip, and may further include another circuit structure and/or a discrete device.

Optionally, the transceiver may be a transceiver circuit. Optionally, the input/output interface may be an input/output circuit.

According to a twenty-second aspect, this application provides a processor, including an input circuit, an output circuit, and a processing circuit. The processing circuit is configured to: receive a signal through the input circuit and perform transmission of a signal through the output circuit, so that the processor performs the method according to the foregoing aspects.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a twenty-third aspect, this application provides a processing apparatus, including a communication interface and a processor. The communication interface is coupled to the processor. The communication interface is configured to input and/or output information. The information includes at least one of instructions or data. The processor is configured to execute a computer program, so that the processing apparatus performs the method according to the foregoing aspects.

According to a twenty-fourth aspect, this application provides a processing apparatus, including a processor and a memory. The processor is configured to: read instructions stored in the memory, receive a signal through a receiver, and perform transmission of a signal through a transmitter, so that the processing apparatus performs the method according to the foregoing aspects.

Optionally, there are one or more processors. If there is the memory, there may be one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in embodiments of this application.

It should be understood that a related information exchange process, for example, sending first reference SRS resource information, may be a process of outputting the first reference SRS resource information from the processor, and receiving the first reference SRS resource information, may be a process of inputting the received first reference SRS resource information to the processor. Specifically, information output by the processor may be output to the transmitter, and input information received by the processor may be from the receiver. The transmitter and the receiver may be collectively referred to as a transceiver.

The apparatuses according to the twenty-third aspect and the twenty-fourth aspect may each be a chip or a chip system. The processor may be implemented by hardware or software. When the processor is implemented by the hardware, the processor may be a logic circuit, an integrated circuit, or the like. When the processor is implemented by the software, the processor may be a general-purpose processor, and is implemented by reading software code stored in the memory. The memory may be integrated in the processor, or may be located outside the processor and exist independently.

According to a twenty-fifth aspect, this application provides a computer program product. The computer program product includes a computer program (which may also be referred to as code or instructions). When the computer program is run, a computer is enabled to perform the method according to the foregoing aspects.

According to a twenty-sixth aspect, this application provides a computer-readable storage medium. The computer-readable storage medium stores a computer program (which may also be referred to as code or instructions). When the computer program is run on a computer, the computer is enabled to perform the method according to the foregoing aspects.

According to a twenty-seventh aspect, this application provides a system, including the foregoing network device, location management device, and terminal device. The network device is configured to perform the method in any one of the first aspect and the possible implementations of the first aspect, configured to perform the method in any one of the second aspect and the possible implementations of the second aspect, configured to perform the method in any one of the third aspect and the possible implementations of the third aspect, or configured to perform the method in any one of the seventh aspect and the possible implementations of the seventh aspect. The location management device is configured to perform the method in any one of the fourth aspect and the possible implementations of the fourth aspect, configured to perform the method in any one of the fifth aspect and the possible implementations of the fifth aspect, configured to perform the method in any one of the sixth aspect and the possible implementations of the sixth aspect, or configured to perform the method in any one of the eighth aspect and the possible implementations of the eighth aspect. The terminal device is configured to perform the method in any one of the ninth aspect and the possible implementations of the ninth aspect.

**BRIEF DESCRIPTION OF DRAWINGS**

FIG. 1 is a diagram of a communication architecture to which an embodiment of this application is applied;
FIG. 2 is a diagram of a time difference of arrival positioning technology;
FIG. 3 is a schematic flowchart of a positioning method according to an embodiment of this application;
FIG. 4 is a diagram of a positioning method according to an embodiment of this application;
FIG. 5 is a schematic flowchart of a positioning method according to an embodiment of this application;
FIG. 6 is a diagram of relative locations of a first SRS resource and a second SRS resource in time domain;
FIG. 7 is a diagram of relative locations of a first SRS resource and a second SRS resource in time domain;
FIG. 8 is a diagram of relative locations of a first SRS resource and a second SRS resource in time domain;
FIG. 9 is a schematic flowchart of a resource configuration method according to an embodiment of this application;
FIG. 10 is a schematic flowchart of a resource configuration method according to an embodiment of this application;
FIG. 11 is a diagram of a communication apparatus according to an embodiment of this application;
FIG. 12 is a block diagram of a communication apparatus according to another embodiment of this application; and
FIG. 13 is a diagram of a chip system according to an embodiment of this application.

**DESCRIPTION OF EMBODIMENTS**

The following describes technical solutions in embodiments of this application with reference to accompanying drawings.

The technical solutions in embodiments of this application may be applied to various communication systems, for example, a long term evolution (long term evolution, LTE) system, a frequency division duplex (frequency division duplex, FDD) system, a time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or a new radio (new radio, NR) system, a 6th generation (6th generation, 6G) system or a future communication system, or the like. A 5G mobile communication system in this application includes a non-standalone (non-standalone, NSA) 5G mobile communication system or a standalone (standalone, SA) 5G mobile communication system. The communication system may alternatively be a public land mobile network (public land mobile network, PLMN), a device-to-device (device-to-device, D2D) communication system, a machine-to-machine (machine-to-machine, M2M) communication system, an internet of things (Internet of things, IoT) communication system, a vehicle-to-everything (vehicle-to-everything, V2X) communication system, an uncrewed aerial vehicle (uncrewed aerial vehicle, UAV) communication system, or another communication system.

A terminal device in embodiments of this application may also be referred to as a user equipment, an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved PLMN, or the like. This is not limited in embodiments of this application.

A network device in embodiments of this application may be any device with a wireless transceiver function. The device includes but is not limited to an evolved NodeB (evolved NodeB, eNB), a radio network controller (radio network controller, RNC), a NodeB (NodeB, NB), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the device may be a gNB or a transmission point (TRP or TP) in the 5G system such as the NR system, may be one antenna panel or a group of antenna panels (including a plurality of antenna panels) of a base station in the 5G system, or may be a network node, such as a baseband unit (BBU) or a distributed unit (distributed unit, DU), that constitutes a gNB or a transmission point.

The following describes the technical solutions in embodiments of this application with reference to the accompanying drawings in embodiments of this application. In descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may indicate: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, b and c, a and c, or a, b and c, where a, b, and c may be singular or plural. In addition, to clearly describe the technical solutions in embodiments of this application, terms such as "first" and "second" are used in embodiments of this application to distinguish between same items or similar items that provide basically same functions and effects. A person skilled in the art may understand that the terms such as "first" and "second" do not limit a quantity and an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In addition, a network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

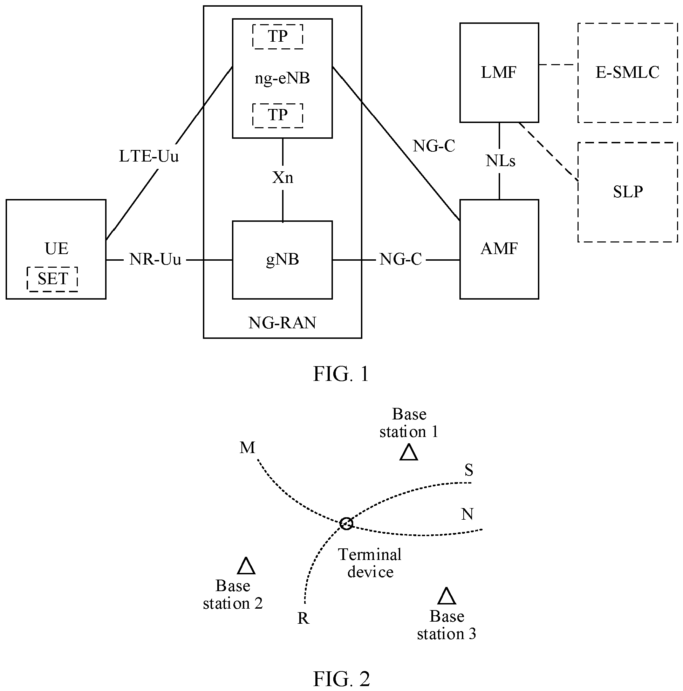

For ease of understanding of embodiments of this application, a diagram of a communication system to which an embodiment of this application is applied is first described in detail with reference to FIG. 1.

As shown in FIG. 1, the communication system includes a terminal device (represented as a UE in FIG. 1), a radio access network (represented as a next generation radio access network (next generation radio access network, NG-RAN) in FIG. 1), and a core network.

The radio access network includes one or more next generation evolved NodeBs (next generation evolved NodeBs, ng-eNBs) and gNBs. The ng-eNB indicates an LTE base station that accesses a 5G core network, and the gNB indicates a 5G base station that accesses the 5G core network. Communication between the ng-eNB and the gNB, two ng-eNBs, or two gNBs is performed through an Xn interface. The Xn interface may also be referred to as an XnAP interface.

The radio access network is connected to the core network through an NG-C interface.

The core network includes an access and mobility management function (access and mobility management function, AMF), a location management function (location management function, LMF), and another function.

The LMF is responsible for supporting different types of location services related to the UE, including positioning of the LTE and transmission of assistance data to the UE. A control plane and a user plane of the LMF are respectively an evolved serving mobile location center (evolved serving mobile location center, E-SMLC) and a secure user plane location platform (secure user plane location platform, SLP). The LMF may perform signal exchange with the RAN, for example, the ng-eNB or the gNB, and the UE. For example, information is exchanged between the LMF and the ng-eNB or the gNB in a new radio positioning protocol annex (new radio positioning protocol annex, NRPPa) message. For example, configuration information of a positioning reference signal (positioning reference signal, PRS) or a sounding reference signal (sounding reference signal, SRS), cell timing, cell location information, and the like are obtained. For another example, UE capability information, assistance information, measurement information, and the like are transferred between the LMF and the UE in an LTE positioning protocol (LTE positioning protocol, LPP) message.

The AMF entity may receive, from a location service (location service, LCS) entity of the 5G core (5G core, 5GC) network, a location service request related to the UE, or the AMF may start some location services on behalf of a specific UE; and forward the location service request to the LMF.

The terminal device is connected to the radio access network via the ng-eNB through an LTE-Uu interface. The terminal device may be alternatively connected to the radio access network via the gNB through an NR-Uu interface.

It should be understood that the communication system may include one or more base stations (including the ng-eNB or the gNB).

It should be further understood that the communication system may include one or more terminal devices, for example, one or more terminal device sets (for example, a UE set shown in FIG. 1).

One gNB may send data or control signaling to the one or more terminal devices. Alternatively, a plurality of gNBs may simultaneously send data or control signaling to one terminal device.

The ng-eNB in FIG. 1 may alternatively be replaced with a TP.

Positioning is an important function in a mobile communication system, and requires the system to provide location information of a user in real time. A 5G communication system has a high-accuracy positioning requirement on the positioning, and requires an outdoor positioning error to be less than 10 meters and an indoor positioning error to be less than 1 meter.

Existing positioning technologies mainly include uplink positioning, downlink positioning, and uplink and downlink positioning. In the uplink positioning, a base station measures an SRS signal sent by a UE. In the downlink positioning, the UE measures a PRS signal sent by the base station. In the uplink and downlink positioning, the UE is required to measure the PRS signal sent by the base station, and the base station is required to measure the SRS signal sent by the UE.

In actual positioning, because a synchronization error or a phase error exists between different UEs and/or base stations, an error occurs in estimation on a delay or a phase by the different UEs and/or base stations. Consequently, a positioning error is caused, and a requirement of the 5G communication system on positioning accuracy cannot be met.

In view of this, embodiments of this application provide a positioning method. A reference device is introduced to assist in positioning, to eliminate the positioning error caused by the synchronization error or the phase error between the different UEs and/or base stations, and improve the positioning accuracy.

For ease of understanding embodiments of this application, a time difference of arrival (time difference of arrival, TDOA) positioning technology is first described with reference to FIG. 2.

A TDOA positioning principle is to position, by measuring a difference between time at which a radio signal arrives at different monitoring stations, a transmit source that performs transmission of the radio signal. Specifically, a location management device calculates a difference between time at which the radio signal arrives at two monitoring stations, and obtains a distance difference based on the time difference, to obtain a hyperbola. The location management device may obtain two or more hyperbolas based on time differences measured by three or more monitoring stations. Further, the location management device positions the transmit source based on an intersection point of the two or more hyperbolas.

FIG. 2 is a diagram of a TDOA positioning technology. A terminal device in FIG. 2 corresponds to the transmit source that performs transmission of the radio signal in the foregoing TDOA positioning technology, and a base station 1, a base station 2, and a base station 3 in FIG. 2 correspond to the monitoring stations that measure the radio signal in the foregoing TDOA positioning technology. To be specific, the terminal device sends a signal, and the base station 1, the base station 2, and the base station 3 separately measure the signal sent by the terminal device.

In an example, a difference between time at which the signal sent by the terminal device arrives at the base station 1 and the base station 2 is $\Delta t1$, and a difference between time at which the signal sent by the terminal device arrives at the base station 2 and the base station 3 is $\Delta t2$. The time difference $\Delta t1$ is multiplied by an electromagnetic wave speed to obtain a distance difference L1, and the time difference $\Delta t2$ is multiplied by the electromagnetic wave speed to obtain a distance difference L2. A location management device obtains a hyperbola MN shown in FIG. 2 based on a functional relationship among a location of the base station 1, a location of the base station 2, and the distance difference L1. The location management device obtains a hyperbola RS shown in FIG. 2 based on a functional relationship among the location of the base station 2, a location of the base station 3, and the distance difference L2. Further, the location management device may position the terminal device based on an intersection point of the hyperbola MN and the hyperbola RS.

In FIG. 2, one of the base station 1, the base station 2, and the base station 3 is a serving base station of the terminal device, and the other two base stations are neighboring cell base stations of the terminal device.

The serving base station of the terminal device is a base station that currently provides a communication connection service for the terminal device. The neighboring cell base station of the terminal device is a base station adjacent to the serving base station. In other words, the serving base station is a base station of a serving cell of the terminal device. The neighboring cell base station is a base station of a neighboring cell of the serving cell of the terminal device.

It should be noted that, in FIG. 2, three base stations are for positioning the terminal device. However, this is not limited in this application. In actual application, more than three base stations may be for positioning the terminal device.

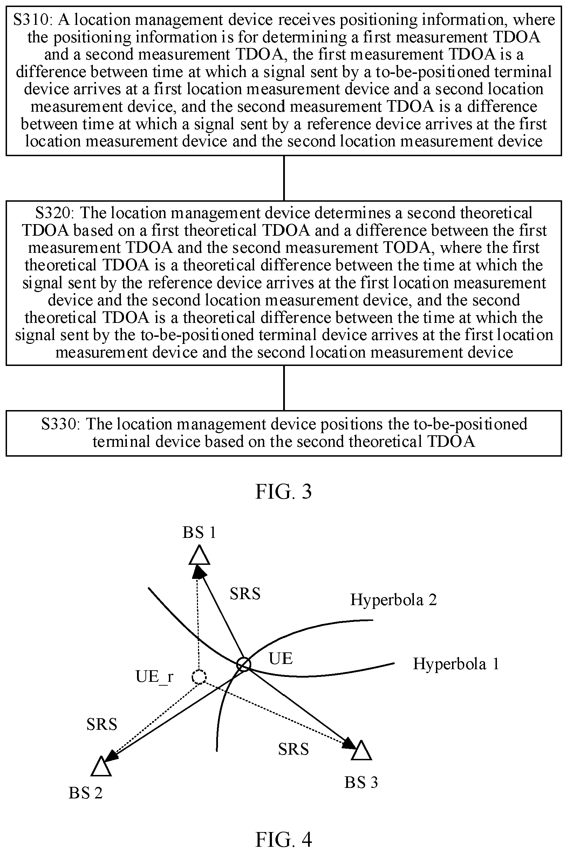

The foregoing describes, with reference to FIG. 3 and FIG. 4, the positioning method provided in embodiments of this application.

FIG. 3 is a schematic flowchart of a positioning method according to an embodiment of this application. The following describes in detail steps included in the method 300.

S310: A location management device receives positioning information, where the positioning information is for determining a first measurement TDOA and a second measurement TDOA.

For example, the location management device may be a part of a core network, or may be integrated into a network device. For example, the location management device may be the LMF shown in FIG. 1, or a location management component (location management component, LMC) in a serving network device of a to-be-positioned terminal device. The location management device may also be referred to as a location center. A name of the location management device is not limited in this application. In a future evolved technology, the location management device may also be assigned another name.

The first measurement TDOA is a difference between time at which a signal (for example, an SRS signal) sent by the to-be-positioned terminal device arrives at a first location measurement device and a second location measurement device. In other words, the first measurement TDOA is a difference between first relative time of arrival (relative time of arrival, RTOA) and second RTOA. The first RTOA is obtained by the first location measurement device by measuring the signal from the to-be-positioned terminal device, and the second RTOA is obtained by the second location measurement device by measuring the signal from the to-be-positioned terminal device.

Refer to FIG. 4. A UE in FIG. 4 is the to-be-positioned terminal device, a BS 1 is the first location measurement device, a BS 2 is the second location measurement device, and the first RTOA may be represented as

$$RTOA_1^{UE} = t_1^{UE} + e^{BS1} + e^{UE} + T$$

. $RTOA_1^{UE}$ represents the first RTOA, $t_1^{UE}$ represents theoretical duration of transmission, between the UE and the BS 1, of the SRS signal sent by the UE, $e^{BS1}$ represents an error introduced by a clock offset or a phase shift of the BS 1 relative to reference time T, and $e^{UE}$ represents an error introduced by a clock offset or a phase shift of the UE relative to the reference time T. It may be understood that in actual measurement, it is impossible for the BS 1 and/or the UE to be completely synchronized with the reference time T. Therefore, $e^{BS1}$ and/or $e^{UE}$ are/is not 0.

The second RTOA may be represented as $RTOA_2^{UE} = t_2^{UE} + e^{BS2} + e^{UE} + T$ . $RTOA_2^{UE}$ represents the second RTOA, $t_2^{UE}$ represents theoretical duration of transmission, between the UE and the BS 2, of the SRS signal sent by the UE, and $e^{BS2}$ represents an error introduced by a clock offset or a phase shift of the BS 2 relative to the reference time T. It may be understood that in actual measurement, it is impossible for the BS 2 and/or the UE to be completely synchronized with the reference time T. Therefore, $e_2^{BS}$ and/or $e^{UE}$ are/is not 0.

The first measurement TDOA obtained by subtracting the first RTOA from the second RTOA may be represented as $TDOA_{21}^{UE} = t_2^{UE} - t_1^{UE} + e^{BS2} - e^{BS1}$ . $TDOA_{21}^{UE}$ represents the first measurement TDOA. It is clear that the first measurement TDOA may alternatively be obtained by subtracting the second RTOA from the first RTOA. This is not limited in this application.

The second measurement TDOA is a difference between time at which a signal (for example, an SRS signal) sent by a reference device arrives at the first location measurement device and the second location measurement device. In other words, the second measurement TDOA is a difference between third RTOA and fourth RTOA. The third RTOA is obtained by the first location measurement device by measuring the signal from the reference device, and the fourth RTOA is obtained by the second location measurement device by measuring the signal from the reference device. An actual distance between the reference device and a location measurement device is known, an actual distance between the reference device and a location measurement device may be obtained through laser ranging or infrared ranging, or an actual distance between the reference device and a location measurement device may be obtained through calculation based on actual positions of the reference device and the location measurement device. Alternatively, an actual location of the reference device is known, or an actual location of the reference device may be obtained by positioning the reference device via a global navigation satellite system (global navigation satellite system, GNSS), Wi-Fi, Bluetooth, or the like.

Refer to FIG. 4. A UE_r in FIG. 4 is the reference device, and the third RTOA may be represented as

$$RTOA_1^{UE\_r} = t_1^{UE\_r} + e^{BS1} + e^{UE\_r} + T$$

. $RTOA_1^{UE\_r}$ represents the third RTOA, $t_1^{UE\_r}$ represents theoretical duration of transmission, between the UE_r and the BS 1, of the SRS signal sent by the UE_r, and $e^{UE\_r}$ represents an error introduced by a clock offset or a phase shift of the UE_r relative to the reference time T. It may be understood that in actual measurement, it is impossible for the BS 1 and/or the UE _r to be completely synchronized with the reference time T. Therefore, $e^{BS1}$ and/or $e^{UE\_r}$ are/is not 0.

The fourth RTOA may be represented as $RTOA_2^{UE\_r} = t_2^{UE\_r} + e^{BS2} + e^{UE\_r} + T$ . $RTOA_2^{UE}$ represents the second RTOA, and $t_2^{UE}$ represents theoretical duration of transmission, between the UE_r and the BS 2, of the SRS signal sent by the UE _r. It may be understood that in actual measurement, it is impossible for the BS 2 and/or the UE_r to be completely synchronized with the reference time T. Therefore, $e^{BS2}$ and/or $e^{UE\_r}$ are/is not 0.

The second measurement TDOA obtained by subtracting the third RTOA from the fourth RTOA may be represented as $TDOA_{21}^{UE\_r} = t_2^{UE\_r} - t_1^{UE\_r} + e^{BS2} - e^{BS1}$ . $TDOA_{21}^{UE\_r}$ represents the second measurement TDOA. It is clear that the second measurement TDOA may alternatively be obtained by subtracting the fourth RTOA from the third RTOA. This is not limited in this application.

For example, that a location management device receives positioning information includes: The location management device receives the first RTOA and the third RTOA from the first location measurement device. The location management device receives the second RTOA and the fourth RTOA from the second location measurement device.

For another example, that a location management device receives positioning information includes: The location management device receives the first RTOA, the second RTOA, the third RTOA, and the fourth RTOA from the first location measurement device. The second RTOA and the fourth RTOA are sent by the second location measurement device to the first location measurement device.

Alternatively, the location management device receives the first TDOA and the second TDOA from the first location measurement device. In other words, after receiving the second RTOA and the fourth RTOA from the second location measurement device, the first location measurement device obtains the first TDOA based on the first RTOA and the second RTOA, then obtains the second TDOA based on the third RTOA and the fourth RTOA, and sends the first TDOA and the second TDOA to the location management device.

For still another example, that a location management device receives positioning information includes: The location management device receives the first RTOA, the second RTOA, the third RTOA, and the fourth RTOA from the second location measurement device. The first RTOA and the third RTOA are sent by the first location measurement device to the second location measurement device.

Alternatively, the location management device receives the first TDOA and the second TDOA from the second location measurement device. In other words, after receiving the first RTOA and the third RTOA from the first location measurement device, the second location measurement device obtains the first TDOA based on the first RTOA and the second RTOA, then obtains the second TDOA based on the third RTOA and the fourth RTOA, and sends the first TDOA and the second TDOA to the location management device.

As described above, when the to-be-positioned terminal device is positioned by using a TDOA positioning technology, a location of the to-be-positioned terminal device is obtained based on an intersection point of at least two hyperbolas, and the at least two hyperbolas are obtained based on at least two TDOAs. Therefore, to position the to-be-positioned terminal device, the positioning information may be further for determining a third measurement TDOA and a fourth measurement TDOA. The third measurement TDOA is a difference between time at which the signal sent by the to-be-positioned terminal device arrives at a third location measurement device and a fourth location measurement device. For more descriptions of the third measurement TDOA, refer to the first measurement TDOA. The fourth measurement TDOA is a difference between time at which the signal sent by the reference device arrives at the third location measurement device and the fourth location measurement device. For more descriptions of the fourth measurement TDOA, refer to the second measurement TDOA. The first location measurement device, the second location measurement device, the third location measurement device, and the fourth location measurement device include at least three different location measurement devices.

Refer to FIG. 4. The BS 1 in FIG. 4 is the third location measurement device, and a BS 3 is the fourth location measurement device. Similar to an expression of the first measurement TDOA, the third measurement TDOA may be represented as $TDOA_{31}^{UE} = t_3^{UE} - t_1^{UE} + e^{BS3} - e^{BS1}$. $TDOA_{31}^{UE}$ represents the third measurement TDOA, $t_3^{UE}$ represents theoretical duration of transmission, between the UE and the BS 3, of the SRS signal sent by the UE, and $e^{BS3}$ represents an error introduced by a clock offset or a phase shift of the BS 3 relative to the reference time T.

Similar to an expression of the second measurement TDOA, the fourth measurement TDOA may be represented as $TDOA_{31}^{UE\_r} = t_3^{UE\_r} - t_1^{UE\_r} + e^{BS3} - e^{BS1}$. $TDOA_{31}^{UE\_r}$ represents the fourth measurement TDOA, and $t_3^{UE\_r}$ represents theoretical duration of transmission, between the UE_r and the BS 3, of the SRS signal sent by the UE_r.

S320: The location management device determines a second theoretical TDOA based on a first theoretical TDOA and a difference between the first measurement TDOA and the second measurement TDOA.

The first theoretical TDOA is a theoretical difference between time at which the signal sent by the reference device arrives at the first location measurement device and the second location measurement device.

The second theoretical TDOA is a theoretical difference between time at which the signal sent by the to-be-positioned terminal device arrives at the first location measurement device and the second location measurement device.

For example, if the difference between the first measurement TDOA and the second measurement TDOA is obtained by subtracting the second measurement TDOA from the first measurement TDOA, the second theoretical TDOA is equal to a sum of the first theoretical TDOA and the difference between the first measurement TDOA and the second measurement TDOA.

A process of subtracting the second measurement TDOA ( $TDOA_{21}^{UE\_r}$ ) from the first measurement TDOA (namely, $TDOA_{21}^{UE}$ ) to obtain the difference is represented as $TDOA_{21}^{UE} - TDOA_{21}^{UE\_r} = (t_2^{UE} - t_1^{UE}) - (t_2^{UE\_r} - t_1^{UE\_r})$ . $t_2^{UE\_r} - t_1^{UE\_r}$ represents the first theoretical TDOA, $t_2^{UE\_r} = d_2^{UE\_r} / c$, $d_2^{UE\_r}$ represents an actual distance between the UE_r and the BS 2, c represents an electromagnetic wave speed, $t_1^{UE\_r} = d_1^{UE\_r} / c$, and $d_1^{UE\_r}$ represents an actual distance between the UE_r and the BS 1. When a location of the reference device or actual distances between the reference device and location measurement devices (including the first location measurement device and the second location measurement device) are known, it is equivalent to that $t_2^{UE\_r} - t_1^{UE\_r}$ is known. Further, the location management device may obtain the second theoretical TDOA based on $TDOA_{21}^{UE} - TDOA_{21}^{UE\_r} + (t_2^{UE\_r} - t_1^{UE\_r})$, that is, the second theoretical TDOA is $t_2^{UE} - t_1^{UE}$.

For another example, if the difference between the first measurement TDOA and the second measurement TDOA is obtained by subtracting the first measurement TDOA from the second measurement TDOA, the second theoretical TDOA is equal to a difference obtained by subtracting the difference between the first measurement TDOA and the second measurement TDOA from the first theoretical TDOA.

A process of subtracting the first measurement TDOA ( $TDOA_{21}^{UE}$ ) from the second measurement TDOA (namely, $TDOA_{21}^{UE\_r}$ ) to obtain the difference is represented as $TDOA_{21}^{UE\_r} - TDOA_{21}^{UE} = (t_2^{UE\_r} - t_1^{UE\_r}) - (t_2^{UE} - t_1^{UE})$. When $t_2^{UE\_r} - t_1^{UE\_r}$ is known, the location management device may obtain the second theoretical TDOA based on $(t_2^{UE\_r} - t_1^{UE\_r}) - (TDOA_{21}^{UE} - TDOA_{21}^{UE\_r})$, that is, the second theoretical TDOA is $t_2^{UE} - t_1^{UE}$.

Similarly, the location management device determines a fourth theoretical TDOA based on a third theoretical TDOA and a difference between the third measurement TDOA and the fourth measurement TDOA. The third theoretical TDOA is a theoretical difference between time at which the signal sent by the reference device arrives at the third location measurement device and the fourth location measurement device. The fourth theoretical TDOA is a theoretical difference between time at which the signal sent by the to-be-positioned terminal device arrives at the third location measurement device and the fourth location measurement device.

For example, a process of subtracting the fourth measurement TDOA ( $TDOA_{31}^{UE\_r}$ ) from the third measurement TDOA (namely, $TDOA_{31}^{UE}$ ) to obtain the difference is represented as $TDOA_{31}^{UE} - TDOA_{31}^{UE\_r} = (t_3^{UE} - t_1^{UE}) - (t_3^{UE\_r} - t_1^{UE\_r})$. $t_3^{UE\_r} - t_1^{UE\_r}$ represents the third theoretical TDOA, $t_3^{UE\_r} = d_3^{UE\_r} / c$, and $d_3^{UE\_r}$ represents an actual distance between the UE_r and the BS 3. When the location of the reference device or actual distances between the reference device and location measurement devices (including the third location measurement device and the fourth location measurement device) are known, it is equivalent to that $t_3^{UE\_r} - t_1^{UE\_r}$ is known. Further, the location management device may obtain the fourth theoretical TDOA based on $TDOA_{31}^{UE} - TDOA_{31}^{UE\_r} + (t_3^{UE\_r} - t_1^{UE\_r})$, that is, the fourth theoretical TDOA is $t_3^{UE} - t_1^{UE}$.

S330: The location management device positions the to-be-positioned terminal device based on the second theoretical TDOA.

A method in which the location management device positions the to-be-positioned terminal device based on the second theoretical TDOA includes: The location management device obtains a distance difference L1 based on the second theoretical TDOA and the electromagnetic wave speed; and further obtains a hyperbola (for example, a hyperbola 1 shown in FIG. 4) based on a functional relationship among a location of the first location measurement device, a location of the second location measurement device, and the distance difference L1.

It may be understood that the location management device further positions the to-be-positioned terminal device based on the fourth theoretical TDOA, in other words, the location management device obtains a distance difference L2 based on the fourth theoretical TDOA and the electromagnetic wave speed, and further obtains another hyperbola (for example, a hyperbola 2 shown in FIG. 4) based on a functional relationship among a location of the third location measurement device, a location of the fourth location measurement device, and the distance difference L2. An intersection point of the hyperbola 1 and the hyperbola 2 is the location of the to-be-positioned terminal device.

In this embodiment of this application, when the reference device is introduced, subtraction between a measurement TDOA obtained by measuring the signal sent by the to-be-positioned terminal device and a measurement TDOA obtained by measuring the signal sent by the reference device is performed, to eliminate an error introduced by a clock offset or a phase shift of the location measurement device, and obtain a theoretical TDOA between the to-be-positioned terminal device and the location measurement device. When positioning the to-be-positioned terminal device based on the theoretical TDOA between the to-be-positioned terminal device and the location measurement device, the location management device may determine a more accurate location of the to-be-positioned terminal device.

However, in actual measurement, when the location measurement device measures the signal from the to-be-positioned terminal device, a phase measured in time domain has a phase shift. For example, the first location measurement device measures the signal from the to-be-positioned terminal device. If a phase measured by the first location measurement device in time domain has a phase shift, the first RTOA may be represented as

$$RTOA_1^{UE} = t_1^{UE} + e^{BS1} + e^{UE} + T' + t_1$$

, and $t_1$ indicates an error introduced by the phase shift that has the phase measured by the first location measurement device in time domain. Because phases measured by different location measurement devices in time domain have different phase shifts, even if the positioning method described in FIG. 3 is used, an error generated due to the phase shift in a positioning measurement process cannot be eliminated.

In view of this, an embodiment of this application further provides a positioning method, to eliminate or reduce an error caused by a phase shift in a positioning measurement process. In this way, positioning accuracy is improved.

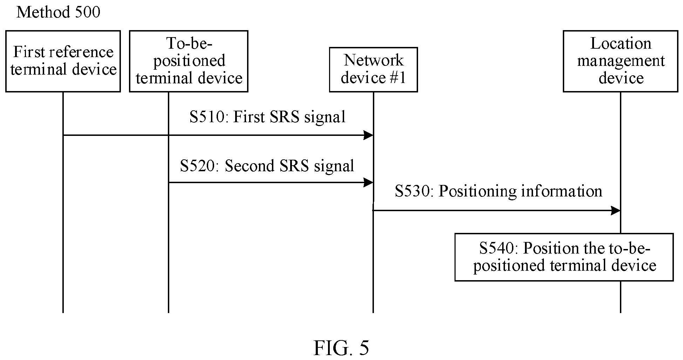

FIG. 5 is a schematic flowchart of a positioning method according to another embodiment of this application. The following describes in detail steps included in the method 500.

S510: A network device #1 receives a first SRS signal from a first reference terminal device.

For example, the network device #1 is a serving network device of a to-be-positioned terminal device, and the to-be-positioned terminal device is a terminal device whose location is unknown. For another example, the network device #1 is a network device adjacent to a serving network device of a to-be-positioned terminal device. For still another example, the network device #1 is a serving network device of the first reference terminal device. The first reference terminal device is a device that has a capability of sending an SRS signal. An actual distance between the first reference terminal device and a network device (including the network device #1) is known, an actual distance between the first reference terminal device and a network device may be obtained through laser ranging or infrared ranging, or an actual distance between the first reference terminal device and a network device may be obtained through calculation based on actual locations of the first reference terminal device and the network device. The actual location of the first reference terminal device is known, or the actual location of the first reference terminal device may be obtained by positioning the first reference terminal device via a GNSS, Wi-Fi, Bluetooth, or the like.

Specifically, the network device #1 receives the first SRS signal from the first reference terminal device on a first SRS resource. Correspondingly, the first reference terminal device sends the first SRS signal on the first SRS resource.

Optionally, if the network device #1 is not the serving network device of the first reference terminal device, before the network device #1 receives the first SRS signal, the method 500 further includes: The network device #1 receives information about the first SRS resource from the location management device, where the information about the first SRS resource is for determining the first SRS resource. Correspondingly, the network device #1 determines the first SRS resource based on the information about the first SRS resource, and receives the first SRS signal on the first SRS resource.

For example, the information about the first SRS resource includes resource configuration information of the first SRS resource and/or an identifier (identifier, ID) of the first SRS resource. The resource configuration information of the first SRS resource includes one or more of the following: a start symbol location, a quantity of occupied symbols, a sending periodicity and offset, a transmission comb and offset, a cyclic shift, a frequency domain position and offset, or a frequency hopping configuration. The ID of the first SRS resource identifies the first SRS resource, and the ID of the first SRS resource may also be referred to as a number of the first SRS resource.

S520: The network device #1 receives a second SRS signal from the to-be-positioned terminal device.

Specifically, the network device #1 receives the second SRS signal from the to-be-positioned terminal device on a second SRS resource. Correspondingly, the to-be-positioned terminal device sends the second SRS signal on the second SRS resource.

In a possible implementation, at least one overlapping time domain unit exists between the first SRS resource

and the second SRS resource. The time domain unit may be a frame (frame), a subframe (subframe), a slot (slot), a symbol (symbol), a millisecond (ms), or the like.

For example, that at least one overlapping time domain unit exists between the first SRS resource and the second SRS resource includes the following several cases: No offset by a time domain unit exists between the first SRS resource and the second SRS resource; or offset by one time domain unit exists between the first SRS resource and the second SRS resource.

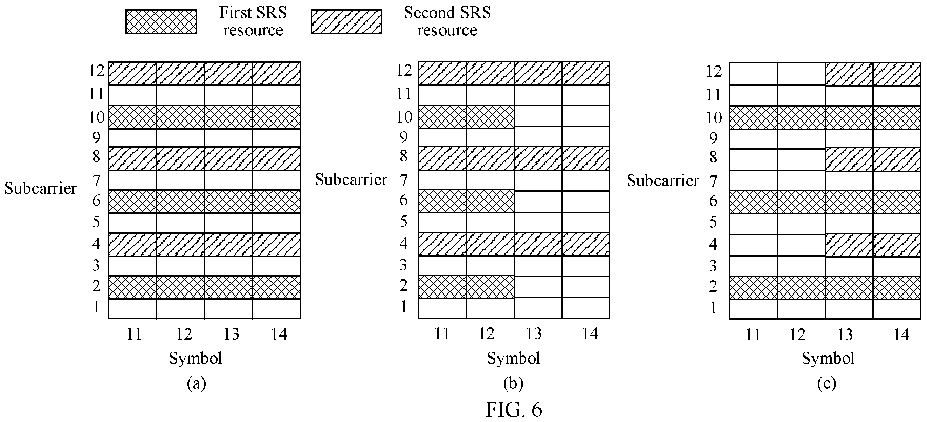

That no offset by a time domain unit exists between the first SRS resource and the second SRS resource means: A start symbol location of the first SRS resource is the same as a start symbol location of the second SRS resource, and/or an end symbol location of the first SRS resource is the same as an end symbol location of the second SRS resource. FIG. 6 shows an example in which no offset by a time domain unit exists between the first SRS resource and the second SRS resource. As shown in (a) in FIG. 6, both the first SRS resource and the second SRS resource occupy a symbol 11 to a symbol 14 in time domain. In other words, the start symbol location of the first SRS resource is the same as the start symbol location of the second SRS resource, and the end symbol location of the first SRS resource is the same as the end symbol location of the second SRS resource. As shown in (b) in FIG. 6, the first SRS resource occupies a symbol 11 and a symbol 12, and the second SRS resource occupies the symbol 11 to a symbol 14. In other words, the start symbol location of the first SRS resource is the same as the start symbol location of the second SRS resource. As shown in (c) in FIG. 6, the first SRS resource occupies a symbol 11 to a symbol 14, and the second SRS resource occupies a symbol 13 and the symbol 14. In other words, the end symbol location of the first SRS resource is the same as the end symbol location of the second SRS resource.

As shown in (a) in FIG. 6, when a time domain position of the first SRS resource is completely the same as a time domain position of the second SRS resource, the first SRS resource and the second SRS resource may completely overlap in time domain. As shown in (b) or (c) in FIG. 6, when a time domain position of the first SRS resource is partially the same as a time domain position of the second SRS resource, the first SRS resource and the second SRS resource may partially overlap in time domain.

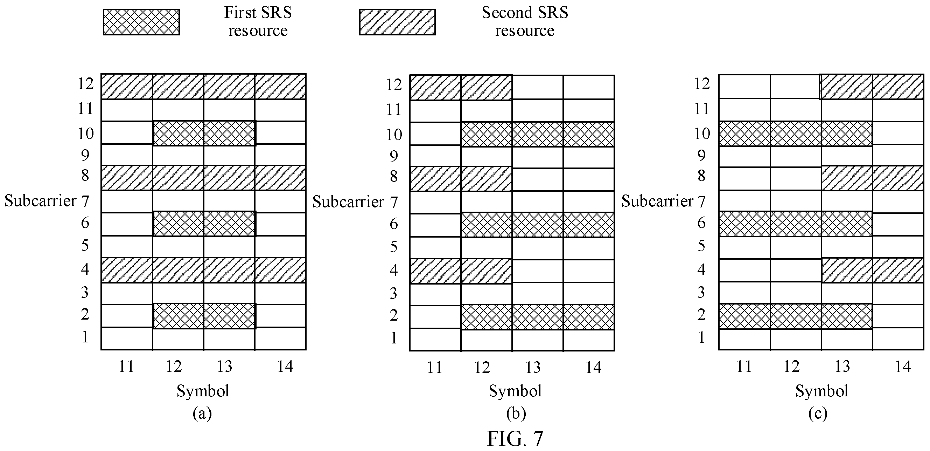

When the offset by one time domain unit exists between the first SRS resource and the second SRS resource, the offset is offset between an $n^{th}$ time domain unit of the first SRS resource and an $n^{th}$ time domain unit of the second SRS resource. For example, the offset is offset between the start symbol location of the first SRS resource and the start symbol location of the second SRS resource, or is offset between the end symbol location of the first SRS resource and the end symbol location of the second SRS resource. FIG. 7 shows an example in which the offset by one time domain unit exists between the first SRS resource and the second SRS resource. As shown in (a) in FIG. 7, the first SRS resource occupies symbols 12 and 13, and the second SRS resource occupies symbols 11 to 14. In other words, offset by one symbol exists between the start symbol location of the first SRS resource and the start symbol location of the second SRS resource, and offset by one symbol exists between the end symbol location of the first SRS resource and the end symbol location of the second SRS resource. As shown in (b) in FIG. 7, the first SRS resource occupies a symbol 12 to a symbol 14, and the second SRS resource occupies a symbol 11 and the symbol 12. In other words, offset by one symbol exists between the start symbol location of the first SRS resource and the start symbol location of the second SRS resource, and offset by one symbol exists between a $2^{nd}$ symbol location of the first SRS resource and a $2^{nd}$ symbol location of the second SRS resource. As shown in (c) in FIG. 7, the first SRS resource occupies a symbol 11 to a symbol 13, and the second SRS resource occupies the symbol 13 and a symbol 14. In other words, offset of one symbol exists between the end symbol location of the first SRS resource and the end symbol location of the second SRS resource.

As shown in (b) or (c) in FIG. 7, when definitions of the offset by the time domain unit between the first SRS resource and the second SRS resource are different, offset between the first SRS resource and the second SRS resource may also be different. As shown in (b) in FIG. 7, if the offset by the time domain unit between the first SRS resource and the second SRS resource is offset between end symbol locations, offset of two symbols exists between the first SRS resource and the second SRS resource. As shown in (c) in FIG. 7, if the offset between the first SRS resource and the second SRS resource is offset between start symbol locations, offset of two symbols exists between the first SRS resource and the second SRS resource.

It should be noted that, in this embodiment of this application, the offset existing between the first SRS resource and the second SRS resource is not limited as one time domain unit. When the at least one overlapping time domain unit exists between the first SRS resource and the second SRS resource, offset by two or more time domain units may exist between the first SRS resource and the second SRS resource.

In another possible implementation, the second SRS resource is adjacent to the first SRS resource in time domain, and a quantity of time domain units by which the second SRS resource is separated from the first SRS resource does not exceed a preset value.

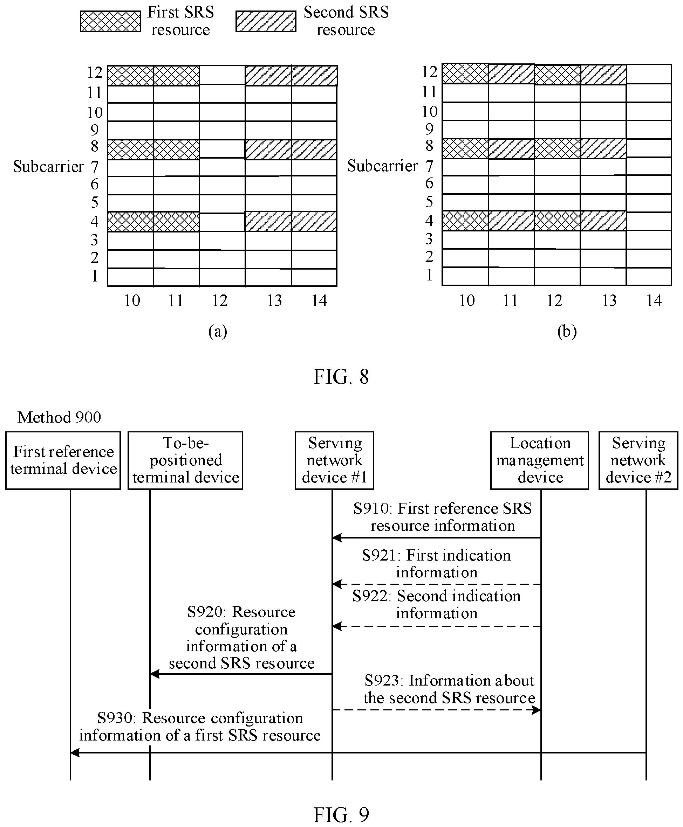

For example, if a time domain position of the second SRS resource is before a time domain position of the first SRS resource, a quantity of symbols by which an end symbol location of the second SRS resource is separated from a start symbol location of the first SRS resource does not exceed the preset value. Alternatively, if a time domain position of the first SRS resource is before a time domain position of the second SRS resource, a quantity of symbols by which an end symbol location of the first SRS resource is separated from a start symbol location of the second SRS resource does not exceed the preset value. As shown in (a) in FIG. 8, the first SRS resource occupies a symbol 10 and a symbol 11, and the second SRS resource occupies symbols 13 and 14. If the end symbol location (namely, the symbol 11) of the first SRS resource and the start symbol location (namely, the symbol 13) of the second SRS resource are separated by one symbol, the first SRS resource and the second SRS resource are separated by one symbol in time domain. For another example, if time domain units occupied by the second SRS resource and the first SRS resource are alternately arranged, a quantity of symbols by which any symbol of the second SRS resource is separated from an adjacent symbol occupied by the first SRS resource does not exceed the preset value. As shown in (b) in FIG. 8, if a symbol 11 occupied by the second SRS resource is adjacent to a symbol 10 and a symbol 12 occupied by the first SRS resource, and a quantity of symbols by which the symbol 11 is separated from the symbol 10 and a quantity of symbols by which the symbol 11 is separated from the symbol 12 are 0, a quantity of symbols by which the first SRS resource is separated from the second SRS resource is 0.

For example, the time domain unit is a symbol, and the preset value is 1. In other words, the second SRS resource and the first SRS resource are separated by a maximum of one symbol in time domain.

It should be noted that a relationship between the first SRS resource and the second SRS resource in frequency domain is not limited in embodiments of this application, and the first SRS resource and the second SRS resource may overlap in frequency domain, or may not overlap in frequency domain. As shown in FIG. 6, the first SRS resource and the second SRS resource do not overlap at all in frequency domain. Alternatively, as shown in FIG. 8, the first SRS resource and the second SRS resource overlap in frequency domain.

Optionally, if the network device #1 is not the serving network device of the to-be-positioned terminal device, before the network device #1 receives the second SRS signal, the method 500 further includes: The network device #1 receives information about the second SRS resource from the location management device, where the information about the second SRS resource is for determining the second SRS resource. Correspondingly, the network device #1 determines the second SRS resource based on the information about the second SRS resource, and receives the second SRS signal on the second SRS resource.

For example, the information about the second SRS resource includes resource configuration information of the second SRS resource and/or an ID of the second SRS resource. For more descriptions of the information about the second SRS resource, refer to the foregoing descriptions of the information about the first SRS resource.

Optionally, before S510 and S520, the method 500 further includes: The network device #1 receives a measurement request (measurement request) message from the location management device. The measurement request message is for requesting the network device #1 to measure the second SRS signal from the to-be-positioned terminal device and measure the first SRS signal from the first reference terminal device. For example, the location management device sends the measurement request message to the network device #1 via an NRPPa protocol, in other words, the location management device sends an NRPPa measurement request message to the network device #1.

S530: The network device #1 sends positioning information to the location management device. Correspondingly, the location management device receives the positioning information from the network device #1.

The positioning information is obtained by the network device #1 by measuring the first SRS signal and the second SRS signal, and the positioning information is for positioning the to-be-positioned terminal device. For example, the positioning information includes RTOA #1 and RTOA #2. The RTOA #1 is relative time of arrival at which the first SRS signal arrives at the network device #1, and the RTOA #2 is relative time of arrival at which the second SRS signal arrives at the network device #1. For another example, the positioning information includes an AOA #1 and an AOA #2. The AOA #1 is an angle of arrival at which the first SRS signal arrives at the network device #1, and the AOA #2 is an angle of arrival at which the second SRS signal arrives at the network device #1. For still another example, the positioning information includes RTOA #1, RTOA #2, an AOA #1, and an AOA #2. Optionally, the positioning information further includes reference signal received power (reference signal received power, RSRP) #1 obtained by the network device #1 by measuring the first SRS signal and RSRP #2 obtained by a serving network device #1 by measuring the second SRS signal.

Optionally, that the network device #1 sends positioning information to the location management device includes: The network device #1 sends a measurement response message to the location management device, where the measurement response message includes the positioning information. For example, the network device #1 sends the measurement response (measurement response) message to the location management device via the NRPPa protocol. In other words, the network device #1 sends an NRPPa measurement response message to the location management device.

Optionally, the method 500 further includes: The network device #1 receives a positioning deactivation (positioning deactivation) message from the location management device. Further, the network device #1 no longer measures the first SRS signal and the second SRS signal. For example, the location management device sends the positioning deactivation message to the network device #1 via the NRPPa protocol, in other words, the location management device sends an NRPPa positioning deactivation message to the network device #1.

S540: The location management device positions the to-be-positioned terminal device based on the positioning information.

After receiving the positioning information, the location management device may position the to-be-positioned terminal device based on the positioning information. It may be understood that if the positioning information includes the RTOA #1 and the RTOA #2, the location management device may position the to-be-positioned terminal device by using a TDOA positioning technology. If the positioning information includes the AOA #1 and the AOA #2, the location management device may position the to-be-positioned terminal device by using an AOA positioning technology.

The following describes, by using an example in which the location management device positions the to-be-positioned terminal device according to the method described in FIG. 3, a principle that an error introduced by a phase shift can be eliminated or reduced according to the method described in FIG. 5.

It should be understood that when the location management device positions the to-be-positioned terminal device by using the TDOA positioning technology, the location management device needs to position the to-be-positioned terminal device based on measurement results obtained by measuring the first SRS signal and the second SRS signal by at least three network devices (including the foregoing network device #1). Refer to FIG. 4. It is assumed that the at least three network devices include a BS 1 (namely, the network device #1), a BS 2, and a BS 3. Measurement results obtained by the BS 2 by measuring the first SRS signal and the second SRS signal include RTOA #3 and RTOA #4, where the RTOA #3 is relative time of arrival at which the first SRS signal arrives at the BS 2, and the RTOA #4 is relative time of arrival at which the second SRS signal arrives at the BS 2. Measurement results obtained by the BS 3 by measuring the first SRS signal and the second SRS signal include RTOA #5 and RTOA #6, where the RTOA #5 is relative time of arrival at which the first SRS signal arrives at the BS 3, and the RTOA #6 is relative time of arrival at which the second SRS signal arrives at the BS 3.

The RTOA #1 may be represented as $RTOA\#1 = t_1^{UE\_r} + e^{BS1} + e^{UE\_r} + T + t_1$. $t_1^{UE\_r}$ represents theoretical duration of transmission, between a UE_r and the BS 1, of the first SRS signal sent by the UE_r (namely, the first reference terminal device), $e^{BS1}$ represents an error introduced by a clock offset or a phase shift of the BS 1 relative to reference time T, $e^{UE\_r}$ represents an error introduced by a clock offset or a phase shift of the UE_r relative to the reference time T, and $t_1$ represents an error introduced by a phase shift existing in a phase measured by the BS 1 on the first SRS resource in time domain.

The RTOA #2 may be represented as $RTOA\#2 = t_1^{UE} + e^{BS1} + e^{UE} + T + t_2$. $t_1^{UE}$ represents theoretical duration of transmission, between a UE (namely, the to-be-positioned terminal device) and the BS 1, the second SRS signal sent by the UE, $e^{UE}$ represents an error introduced by a clock offset or a phase shift of the UE relative to the reference time T, and $t_2$ represents an error introduced by a phase shift existing in a phase measured by the BS 1 on the second SRS resource in time domain.

The RTOA #3 may be represented as $RTOA\#3 = t_2^{UE\_r} + e^{BS2} + e^{UE\_r} + T + t_3$. $t_2^{UE\_r}$ represents theoretical duration of transmission, between the UE_r and the BS 2, of the first SRS signal sent by the UE_r, $e^{BS2}$ represents an error introduced by a clock offset or a phase shift of the BS 1 relative to the reference time T, and $t_3$ represents an error introduced by a phase shift existing in a phase measured by the BS 2 on the first SRS resource in time domain.

The RTOA #4 may be represented as $RTOA\#4 = t_2^{UE} + e^{BS2} + e^{UE} + T + t_4$. $t_2^{UE}$ represents theoretical duration of transmission, between the UE and the BS 2, of the second SRS signal sent by the UE, and $t_4$ represents an error introduced by a phase shift existing in a phase measured by the BS 2 on the second SRS resource in time domain.

The RTOA #5 may be represented as $RTOA\#5 = t_3^{UE\_r} + e^{BS3} + e^{UE\_r} + T + t_5$. $t_3^{UE\_r}$ represents theoretical duration of transmission, between the UE_r and the BS 3, of the first SRS signal sent by the UE_r, $e^{BS3}$ represents an error introduced by a clock offset or a phase shift of the BS 3 relative to the reference time T, and $t_5$ represents an error introduced by a phase shift existing in a phase measured by the BS 3 on the first SRS resource in time domain.

The RTOA #6 may be represented as $RTOA\#6 = t_3^{UE} + e^{BS3} + e^{UE} + T + t_6$. $t_3^{UE}$ represents theoretical duration of transmission, between the UE and the BS 3, of the second SRS signal sent by the UE, and $t_6$ represents an error introduced by a phase shift existing in a phase measured by the BS 3 on the second SRS resource in time domain.

Further, the location management device obtains a TDOA#1 by subtracting the RTOA #1 from the RTOA #3, that is, $TDOA\#1 = t_2^{UE\_r} - t_1^{UE\_r} + e^{BS2} - e^{BS1} + t_3 - t_1$. The location management device obtains a TDOA #2 by subtracting the RTOA #2 from the RTOA #4, that is, $TDOA\#2 = t_2^{UE} - t_1^{UE} + e^{BS2} - e^{BS1} + t_4 - t_2$. The location management device then obtains

$$TDOA\#2 - TDOA\#1 = (t_2^{UE} - t_1^{UE}) - (t_2^{UE\_r} - t_1^{UE\_r}) + (t_1 - t_2) + (t_4 - t_3)$$

subtracting the TDOA #1 from the TDOA#2. When a location of the UE_r or actual distances between the UE_r and network devices (including the BS 1 and the BS 2) are known, it is equivalent to that $t_2^{UE\_r} - t_1^{UE\_r}$ is known. Further, the location management device may obtain

$$(t_2^{UE} - t_1^{UE}) + (t_1 - t_2) + (t_4 - t_3) = TDOA\#2 - TDOA\#1 + (t_2^{UE\_r} - t_1^{UE\_r})$$

. Further, the location management device may obtain a distance difference L1 based on $(t_2^{UE} - t_1^{UE}) + (t_1 - t_2) + (t_4 - t_3)$ and an electromagnetic wave speed, and obtain a hyperbola (for example, the hyperbola 1 shown in FIG. 4) based on a functional relationship among a location of the BS 1, a location of the BS 2, and the distance difference L1.

The location management device obtains a TDOA #3 by subtracting the RTOA#1 from the RTOA #5, that is,

$$TDOA\#3 = t_3^{UE\_r} - t_1^{UE\_r} + e^{BS3} - e^{BS1} + t_5 - t_1$$

. The location management device obtains a TDOA #4 by subtracting the RTOA #2 from the RTOA #6, that is, $TDOA\#4 = t_3^{UE} - t_1^{UE} + e^{BS3} - e^{BS1} + t_6 - t_2$. The location management device then obtains $TDOA\#4 - TDOA\#3 = (t_3^{UE} - t_1^{UE}) - (t_3^{UE\_r} - t_1^{UE\_r}) + (t_1 - t_2) + (t_6 - t_5)$ subtracting the TDOA #3 from the TDOA #4. When the location of the UE_r or actual distances between the UE_r and network devices (including the BS 1 and the BS 3) are known, it is equivalent to that $t_3^{UE\_r} - t_1^{UE\_r}$ is known. Further, the location management device may obtain

$$(t_3^{UE} - t_1^{UE}) + (t_1 - t_2) + (t_6 - t_5) = TDOA\#4 - TDOA\#3 + (t_3^{UE\_r} - t_1^{UE\_r})$$

. Further, the location management device may obtain a distance difference L2 based on $(t_3^{UE} - t_1^{UE}) + (t_1 - t_2) + (t_6 - t_5)$ and the electromagnetic wave speed, and obtain a hyperbola (for example, the hyperbola 2 shown in FIG. 4) based on a functional relationship among the location of the BS 1, a location of the BS 3, and the distance difference L2.

Further, the location management device determines that the to-be-positioned terminal device is located at an intersection point of the hyperbola 1 and the hyperbola 2.

It should be understood that if the first SRS resource and the second SRS resource completely overlap in time domain, a phase shift existing in phases measured by the network device #1 on the first SRS resource in time domain and a phase shift existing in phases measured by the network device #1 on the second SRS resource in time domain are the same. Therefore, $t_2$ is equal to $t_1$. Similarly, $t_3$ is equal to $t_4$, and $t_5$ is equal to $t_6$. Based on this, in the foregoing positioning procedure, the location management device may obtain $(t_2^{UE} - t_1^{UE})$ by subtracting the TDOA #1 from the TDOA #2, and may obtain $(t_3^{UE} - t_1^{UE})$ by subtracting the TDOA #3 from the TDOA #4. Further, when positioning the to-be-positioned terminal device based on $(t_2^{UE} - t_1^{UE})$ and $(t_3^{UE} - t_1^{UE})$, the location management device may obtain a more accurate location of the to-be-positioned terminal device. In other words, if the first SRS resource and the second SRS resource completely overlap in time domain, by subtracting the TDOA #1 from the TDOA#2, and subtracting the TDOA #3 from the TDOA #4, the location management device can eliminate an error introduced by a clock offset or a phase shift of a network device, and further eliminate an error caused by a phase shift existing in a phase measured by the network device.

If the first SRS resource and the second SRS resource partially overlap in time domain, or the first SRS resource and the second SRS resource are adjacent in time domain and a quantity of time units by which the first SRS resource is separated from the second SRS resource does not exceed a preset value, a phase shift existing in phases measured by the network device #1 on the first SRS resource in time domain and a phase shift existing in phases measured by the network device #1 on the second SRS resource in time domain are close. Therefore, a difference between $t_2$ and $t_1$ is extremely small. Similarly, a difference between $t_3$ and $t_4$ is extremely small, and a difference between $t_5$ and $t_6$ is extremely small. Based on this, in the foregoing positioning procedure, for the location management device, the TDOA #1 is subtracted from the TDOA #2, and the TDOA #3 is subtracted from the TDOA #4. In this way, the error introduced by the phase shift existing in the phase measured by the network device may be reduced to some extent, although cannot be completely eliminated, in comparison with a case in which an interval between the first SRS resource and the second SRS resource in time domain is extremely large.

In this embodiment of this application, the to-be-positioned terminal device sends the first SRS signal on the first SRS resource, and the first reference terminal device sends the second SRS signal on the second SRS resource. Because the at least one overlapping time domain unit exists between the first SRS resource and the second SRS resource, when the to-be-positioned terminal device is positioned by measuring the first SRS signal and the second SRS signal, a phase shift existing in phases measured by a same network device on the first SRS resource in time domain and a phase shift existing in phases measured by the same network device on the second SRS resource in time domain are the same or similar. This helps eliminate or reduce an error introduced by the phase shift, and improve positioning accuracy.

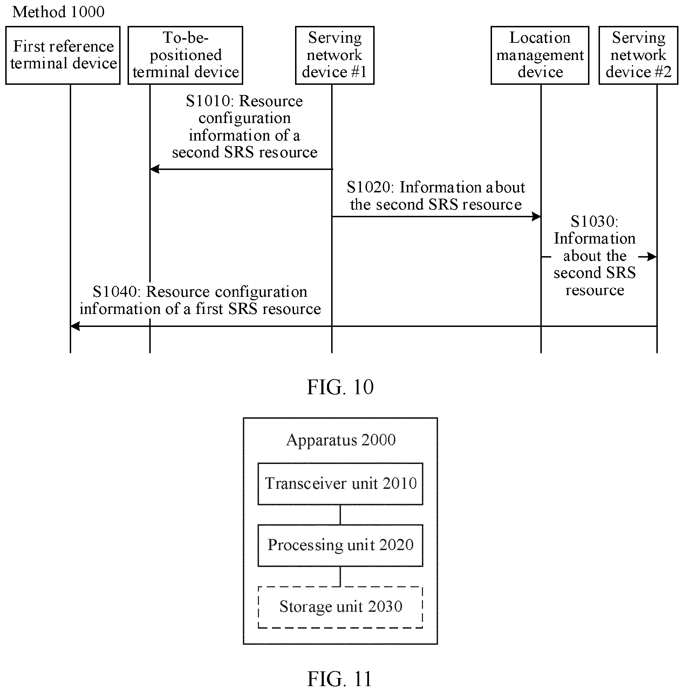

It may be understood that before the to-be-positioned terminal device sends the second SRS signal on the second SRS resource, the serving network device (denoted as a serving network device #1 below) of the to-be-positioned terminal device configures the second SRS resource for the to-be-positioned terminal device; and before the first reference terminal device sends the first SRS signal on the first SRS resource, the serving network device (denoted as a serving network device #2 below) of the first reference terminal device configures the first SRS resource for the first reference terminal device. With reference to FIG. 9 and FIG. 10, the following describes a method for configuring SRS resources for a to-be-positioned terminal device and a first reference terminal device.

FIG. 9 is a schematic flowchart of a resource configuration method according to an embodiment of this application. In the method shown in FIG. 9, before a to-be-positioned terminal device sends a second SRS signal, a serving network device #1 configures a second SRS resource for the to-be-positioned terminal device in a manner predefined in a protocol or based on an indication of a location management device. The following describes in detail steps included in the method 900.

It should be noted that, for two cases in which the serving network device #1 and a serving network device #2 are a same network device and the serving network device #1 and the serving network device #2 are different network devices, manners of configuring SRS resources for the to-be-positioned terminal device and a first reference terminal device are different. The following separately describes methods for configuring the SRS resources for the to-be-positioned terminal device and the first reference terminal device in the foregoing two cases.

**Case 1: If the serving network device #1 and the serving network device #2 are different network devices, a method for configuring the SRS resources for the to-be-positioned terminal device and the first reference terminal device includes the following steps.**

S910: The serving network device #1 receives first reference SRS resource information from the location management device. Correspondingly, the location management device sends the first reference SRS resource information to the serving network device #1.

For example, the first reference SRS resource information includes one or more of the following: a start symbol location, a quantity of occupied symbols, a sending periodicity and offset, a transmission comb and offset, a cyclic shift, a frequency domain position and offset, or a frequency hopping configuration.

For example, the first reference SRS resource information includes at least the start symbol location, the quantity of occupied symbols, and the sending periodicity and the offset.

For example, the first reference SRS resource information includes an ID of a first SRS resource.

A manner in which the location management device obtains the first reference SRS resource information is not limited in embodiments of this application.

In a possible implementation, the first reference SRS resource information is received by the location management device from the serving network device #2.

The first reference SRS resource information sent by the serving network device #2 to the location management device is information about the first SRS resource. In other words, the first reference SRS resource information is related to the first SRS resource. The first SRS resource is an SRS resource configured by the serving network device #2 for the first reference terminal device. For descriptions of the information about the first SRS resource, refer to S510 in the foregoing method 500.

In another possible implementation, the first reference SRS resource information is determined by the location management device based on an SRS resource of at least one reference terminal device. In other words, the first reference SRS resource information is related to the SRS resource of the at least one reference terminal device.

In an example, the first reference SRS resource information is related to an SRS resource of the first reference terminal device. For example, the first reference SRS resource information is information about the SRS resource (namely, the first SRS resource) of the first reference terminal device, or the first reference SRS resource information is information obtained based on the first SRS resource.

The first reference terminal device is a reference terminal device closest to the to-be-positioned terminal device, and/or a reference terminal device with best signal quality. A location of a reference terminal device is known, or actual distances between the reference terminal device and network devices (including the serving network device #1 and the serving network device #2) are known.

The information obtained based on the first SRS resource may be information about an SRS resource including the first SRS resource, or information about an SRS resource that has at least one overlapping time domain unit with the first SRS resource.

In another example, the first reference SRS resource information is related to SRS resources of at least two reference terminal devices. For example, the first reference SRS resource information is information about the SRS resources of the at least two reference terminal devices, or the first reference SRS resource information is information obtained based on the SRS resources of the at least two reference terminal devices.

The at least two reference terminal devices include the first reference terminal device. The at least two reference terminal devices may include a reference terminal device whose distance from the to-be-positioned terminal device is less than a first threshold, and/or include a reference terminal device whose signal quality is greater than a second threshold. The first threshold and/or the second threshold may be preconfigured, or predefined in a protocol. This is not limited in embodiments of this application.

The information about the SRS resources of the at least two reference terminal devices includes information about an SRS resource of each of the at least two reference terminal devices.

Information obtained based on the information about the SRS resources of the at least two reference terminal devices may be information about SRS resources including the SRS resources of the at least two reference terminal devices, or may be information about an SRS resource that has at least one overlapping time domain unit with the SRS resources of the at least two reference terminal devices.

Optionally, that the serving network device #1 receives first reference SRS resource information from the location management device includes: The serving network device #1 receives a plurality of pieces of reference SRS resource information and priority information of the plurality of pieces of reference SRS resource information from the location management device, where the priority information indicates a priority of each of the plurality of pieces of reference SRS resource information, and the plurality of pieces of reference SRS resource information include the first reference SRS resource information.

Optionally, the serving network device #1 further receives identifiers of a plurality of reference terminal devices, and the identifiers of the plurality of reference terminal devices are in one-to-one correspondence with the plurality of pieces of reference SRS resource information.

Optionally, that the location management device sends the first reference SRS resource information to the serving network device #1 includes: The location management device sends a positioning information request (positioning information request) message to the serving network device #1, where the positioning information request message includes the first reference SRS resource information. For example, the location management device sends the positioning information request message to the serving network device #1 via an NRPPa protocol, in other words, the location management device sends an NRPPa positioning information request message to the serving network device #1.

S920: The serving network device #1 sends resource configuration information of the second SRS resource to the to-be-positioned terminal device.

The resource configuration information of the second SRS resource indicates the second SRS resource, and the resource configuration information of the second SRS resource includes one or more of the following: a start symbol location, a quantity of occupied symbols, a sending periodicity and offset, a transmission comb and offset, a cyclic shift, a frequency domain position and offset, or a frequency hopping configuration.

After receiving the first reference SRS resource information, the serving network device #1 configures the second SRS resource for the to-be-positioned terminal device based on the first reference SRS resource information. For example, after receiving the first reference SRS resource information, the serving network device #1 determines a time domain position of the first SRS resource based on the first reference SRS resource information, and then determines, for the to-be-positioned terminal device, the second SRS resource that has at least one overlapping time domain unit with the first SRS resource. For example, the time domain unit is a symbol.

In an example, if the first reference SRS resource information includes a start symbol location, the serving network device #1 may configure, for the to-be-positioned terminal device based on the first reference SRS resource information, a second SRS resource that occupies a start symbol, to help implement the case in which the at least one overlapping time domain unit exists between the first SRS resource and the second SRS resource. For example, if the start symbol location included in the first reference SRS resource information is a start symbol location of the first SRS resource, the first SRS resource and the second SRS resource overlap at the start symbol location.

In another example, if the first reference SRS resource information includes a start symbol location and a quantity of occupied symbols, the serving network device #1 may determine a time domain position of one SRS resource based on the first reference SRS resource information. Further, the serving network device #1 may determine, for the to-be-positioned terminal device, a second SRS resource that has at least one overlapping time domain unit with the SRS resource, to help implement the case in which the at least one overlapping time domain unit exists between the first SRS resource and the second SRS resource. For example, if the SRS resource determined based on the first reference SRS resource information includes the first SRS resource, and the second SRS resource configured by the serving network device #2 for the to-be-positioned terminal device completely overlaps the SRS resource determined based on the first reference SRS resource information, at least one overlapping symbol exists between the first SRS resource and the second SRS resource.

In still another example, if the first reference SRS resource information includes a frequency domain position and offset, the serving network device #1 may determine, based on the first reference SRS resource information, a time domain position of an SRS resource corresponding to the frequency domain position and the offset. Further, the serving network device #1 may determine, for the to-be-positioned terminal device, a second SRS resource that has at least one overlapping time domain unit with the SRS resource, to help implement the case in which the at least one overlapping time domain unit exists between the first SRS resource and the second SRS resource.

Optionally, in S910, if the serving network device #1 receives the plurality of pieces of reference SRS resource information, the serving network device #1 selects the first reference SRS resource information from the plurality of pieces of reference SRS resource information, and then configures the second SRS resource for the to-be-positioned terminal device based on the first reference SRS resource information. For example, the first reference SRS resource information has a highest priority in the plurality of pieces of reference SRS resource information. For another example, the first reference SRS resource information has a highest priority in at least one piece of target reference SRS resource information. The at least one piece of target reference SRS resource information belongs to the plurality of pieces of reference SRS resource information. In addition, at least one overlapping time domain unit exists between an SRS resource indicated by each of the at least one piece of target reference SRS resource information and an SRS resource that may be allocated to the to-be-positioned terminal device. For example, an SRS resource #A indicated by reference SRS resource information #A in the plurality of pieces of reference SRS resource information occupies a symbol 11 and a symbol 12, and an SRS resource #B indicated by reference SRS resource information #B in the plurality of pieces of reference SRS resource information occupies a symbol 13 and a symbol 14. The SRS resource that may be allocated to the to-be-positioned terminal device occupies symbols 11 and 14. In other words, one overlapping symbol exists, in time domain, between each of the SRS resource #A and the SRS resource #B and the SRS resource that may be allocated to the to-be-positioned terminal device. Further, if a priority of the reference SRS resource information #A is higher than a priority of the reference SRS resource information #B, the serving network device #1 determines the reference SRS resource information #A as the first reference SRS resource information.

For example, the serving network device #1 may determine, in a manner predefined in a protocol, to configure, for the to-be-positioned terminal device, the second SRS resource that has the at least one overlapping time domain unit with the first SRS resource. The predefined manner includes: determining, for the to-be-positioned terminal device, the second SRS resource that has the at least one overlapping time domain unit with the first SRS resource. For example, the predefined manner includes: determining, for the to-be-positioned terminal device, a second SRS resource that has no offset by a time domain unit from the first SRS resource. Alternatively, the predefined manner includes: determining, for the to-be-positioned terminal device, a second SRS resource that has offset by one time domain unit from the first SRS resource. Alternatively, the predefined manner includes: determining, for the to-be-positioned terminal device, a second SRS resource that is adjacent to the first SRS resource in time domain and that is separated from the first SRS resource by time domain units of a quantity that does not exceed a preset value.

For another example, the serving network device #1 may determine, based on an indication of the location management device, to configure, for the to-be-positioned terminal device, the second SRS resource that has the at least one overlapping time domain unit with the first SRS resource. In other words, before S920, the method 900 further includes S921 and/or S922.

S921: The serving network device #1 receives first indication information from the location management device. Correspondingly, the location management device sends the first indication information to the serving network device #1.

For example, the first indication information indicates to configure, for the to-be-positioned terminal device, the second SRS resource that completely overlaps the first SRS resource in time domain, or indicates to configure, for the to-be-positioned terminal device, the second SRS resource that partially overlaps the first SRS resource in time domain. For another example, the first indication information indicates to configure, for the to-be-positioned terminal device, the second SRS resource that has no offset by a time domain unit from the first SRS resource, or indicates to configure, for the to-be-positioned terminal device, the second SRS resource that has offset by a time domain unit from the first SRS resource.

For example, when the first indication information indicates to configure, for the to-be-positioned terminal device, the second SRS resource that completely overlaps the first SRS resource in time domain, it is equivalent to that the first indication information indicates to configure, for the to-be-positioned terminal device, a time domain resource indicated by the first reference SRS resource information.

For example, the first indication information may be named a "recommendation configuration label".

For example, the first indication information may be 1-bit information. For example, if a value of the first indication information is "1", the first indication information indicates to configure, for the to-be-positioned terminal device, the second SRS resource that completely overlaps the first SRS resource in time domain. If a value of the first indication information is "0", the first indication information indicates to configure, for the to-be-positioned terminal device, the second SRS resource that partially overlaps the first SRS resource in time domain. For another example, if a value of the first indication information is "1", the first indication information indicates to configure, for the to-be-positioned terminal device, the second SRS resource that completely overlaps the first SRS resource in time domain. If a value of the first indication information is "0", the first indication information indicates to configure, for the to-be-positioned terminal device, the second SRS resource that partially overlaps the first SRS resource in time domain.

The first indication information may be 2-bit information. For example, if a value of the first indication information is "00", the first indication information indicates to configure, for the to-be-positioned terminal device, the second SRS resource that completely overlaps the first SRS resource in time domain. If a value of the first indication information is "10", the first indication information indicates to configure, for the to-be-positioned terminal device, the second SRS resource that partially overlaps the first SRS resource in time domain. If a value of the first indication information is "01", the first indication information indicates to configure, for the to-be-positioned terminal device, the second SRS resource adjacent to the first SRS resource in time domain.

Optionally, the first indication information may indicate to configure, for the to-be-positioned terminal device, the second SRS resource that completely overlaps the first SRS resource, or the first indication information may indicate to configure, for the to-be-positioned terminal device, the second SRS resource adjacent to the first SRS resource. For example, if the value of the first indication information is "1", the first indication information indicates to configure, for the to-be-positioned terminal device, the second SRS resource that completely overlaps the first SRS resource. If the value of the first indication information is "0", the first indication information indicates to configure, for the to-be-positioned terminal device, the second SRS resource adjacent to the first SRS resource. That the second SRS resource completely overlaps the first SRS resource means that the second SRS resource completely overlaps the first SRS resource in time domain and in frequency domain. That the second SRS resource is adjacent to the first SRS resource means that the second SRS resource is adjacent to the first SRS resource in time domain and/or adjacent to the first SRS resource in frequency domain.

It should be noted that the first reference SRS resource information # and the first indication information that are sent by the location management device to the serving network device #1 may be carried in a same message. For example, the NRPPa positioning information request message sent by the location management device to the serving network device #1 includes the first reference SRS resource information and the first indication information. Alternatively, the first reference SRS resource information and the first indication information that are sent by the location management device to the serving network device #1 may be carried in different messages.

S922: The location management device sends second indication information to the serving network device #1. Correspondingly, the location management device sends the second indication information to the serving network device #1.

The second indication information indicates one or more of the following: offset, a time domain unit, and a maximum frequency domain interval allowed for separating the first SRS resource from the second SRS resource in frequency domain. The offset is allowed offset by a time domain unit between the first SRS resource and the second SRS resource. For example, the frequency domain interval represents a quantity of frequency domain units. In other words, the second indication information further indicates a maximum quantity of frequency domain units allowed for separating the first SRS resource from the second SRS resource in frequency domain. The frequency domain unit is a subcarrier, a resource block (resource block, RB), or the like.

For example, the second indication information may be named "offset indication".

For example, a value of the second indication information is equal to the offset. For example, if the value of the second indication information is "0", it indicates that the offset is 0. In this case, the second indication information may indicate to configure, for the to-be-positioned terminal device, the second SRS resource that completely overlaps the first SRS resource in time domain, or indicate to configure, for the to-be-positioned terminal device, the time domain resource indicated by the first reference SRS resource information. For example, if the value of the second indication information is "1", it indicates that the offset is 1. In this case, the second indication information may indicate to configure, for the to-be-positioned terminal device, the second SRS resource that has the offset by one time domain unit from the first SRS resource, or indicate to configure, for the to-be-positioned terminal device, a second SRS resource that has offset by a maximum of one time domain unit from the first SRS resource.

For example, the value of the second indication information is equal to the maximum quantity of frequency domain units allowed for separating the first SRS resource from the second SRS resource in frequency domain. In other words, the second indication information indicates the maximum quantity of frequency domain units allowed for separating the first SRS resource from the second SRS resource in frequency domain.

For example, the second indication information includes two values. A 1st value indicates the offset, and a 2nd value indicates the maximum quantity of frequency domain units allowed for separating the first SRS resource from the second SRS resource in frequency domain.

It should be noted that the first reference SRS resource information # and the second indication information that are sent by the location management device to the serving network device #1 may be carried in a same message. For example, the NRPPa positioning information request message sent by the location management device to the serving network device #1 includes the first reference SRS resource information and the second indication information. Alternatively, the first reference SRS resource information and the second indication information that are sent by the location management device to the serving network device #1 may be carried in different messages.

It should be further noted that if the serving network device #1 receives the first indication information, the serving network device #1 configures the second SRS resource for the to-be-positioned terminal device based on the first indication information. If the serving network device #1 receives the second indication information, the serving network device #1 configures the second SRS resource for the to-be-positioned terminal device based on the second indication information. If the serving network device #1 receives the first indication information and the second indication information, the serving network device #1 may configure the second SRS resource for the to-be-positioned terminal device based on the first indication information, configure the second SRS resource for the to-be-positioned terminal device based on the second indication information, or configure the second SRS resource for the to-be-positioned terminal device based on the first indication information and the second indication information. For example, if the first indication information indicates to configure, for the to-be-positioned terminal device, the second SRS resource that partially overlaps the first SRS resource, and the second indication information indicates that the time domain unit is the symbol and the offset is 1, the serving network device #1 configures, for the to-be-positioned terminal device based on the first indication information and the second indication information, the second SRS resource that has offset by a maximum of one symbol from the first SRS resource. For another example, the first indication information indicates to configure, for the to-be-positioned terminal device, the second SRS resource adjacent to the first SRS resource, and the second indication information indicates that the maximum quantity of frequency domain units allowed for separating the first SRS resource from the second SRS resource in frequency domain is 1, the serving network device #1 configures, for the to-be-positioned terminal device based on the first indication information and the second indication information, the second SRS resource that completely overlaps the first SRS resource in time domain, that is adjacent to the first SRS resource in frequency domain, and that is separated from the first SRS resource by frequency domain units of a quantity that does not exceed 1.

Optionally, the method 900 further includes: The serving network device #1 receives third indication information from the location management device, where the third indication information indicates that the first SRS resource is a reference resource. Correspondingly, the serving network device #1 uses the first SRS resource as the reference resource based on the third indication information, and configures, for the to-be-positioned terminal device, the second SRS resource that has the at least one overlapping time domain unit with the first SRS resource. The reference resource is an SRS resource of the reference terminal device.

Optionally, that the serving network device #1 receives the first reference SRS resource information from the location management device includes: The serving network device #1 receives reference resource information from the location management device, where the reference resource information includes the first reference SRS resource information. Correspondingly, the serving network device #1 uses the first SRS resource as the reference resource based on the reference resource information, and configures, for the to-be-positioned terminal device, the second SRS resource that has the at least one overlapping time domain unit with the first SRS resource.

Optionally, the method 900 further includes S923.

S923: The serving network device #1 sends information about the second SRS resource to the location management device. Correspondingly, the location management device receives the information about the second SRS resource from the serving network device #1.

For more descriptions of the information about the second SRS resource, refer to S510 in the foregoing method 500.

If the location management network device sends the plurality of pieces of reference SRS resource information to the serving network device #1, after receiving the information about the second SRS resource, the location management device may determine the first reference SRS resource information from the plurality of pieces of reference SRS resource information based on the information about the second SRS resource, for example, determine that the first reference SRS resource information has the highest priority in the at least one piece of target reference SRS resource information. Further, the location management device may determine that the first reference terminal device corresponding to the first reference SRS resource information participates in positioning of the to-be-positioned terminal device.

Optionally, if the location management device sends, to the serving network device #1, the identifiers of the plurality of reference terminal devices corresponding to the plurality of pieces of reference SRS resource information, in S923, the serving network device #1 may send, to the location management device, an identifier of the first reference terminal device corresponding to the first reference SRS resource information.

Optionally, in S910, if the location management device sends the first reference SRS resource information to the serving network device #1 in the positioning information request message, the method 900 further includes: The serving network device #1 sends a positioning information response message to the location management device. For example, the serving network device #1 sends the positioning information response message to the location management device via the NRPPa protocol. In other words, the serving network device #1 sends an NRPPa positioning information response message to the location management device. Optionally, the positioning information response message includes the information about the second SRS resource.

S930: The serving network device #2 sends resource configuration information of the first SRS resource to the first reference terminal device. Correspondingly, the first reference terminal device receives the resource configuration information of the first SRS resource from the serving network device #2.

The resource configuration information of the first SRS resource indicates the first SRS resource, and the resource configuration information of the first SRS resource includes one or more of the following: a start symbol location, a quantity of occupied symbols, a sending periodicity and offset, a transmission comb and offset, a cyclic shift, a frequency domain position and offset, or a frequency hopping configuration.

**Case 2: If the serving network device #1 and the serving network device #2 are a same network device, a method for configuring the SRS resource for the to-be-positioned terminal device and the first reference terminal device includes the following steps.**

S920: The serving network device #1 sends resource configuration information of the second SRS resource to the to-be-positioned terminal device.

The resource configuration information of the second SRS resource indicates the second SRS resource.

S930: The serving network device #2 sends resource configuration information of the first SRS resource to the first reference terminal device.

The resource configuration information of the first SRS resource indicates the first SRS resource. The serving network device #2 and the serving network device #1 are the same network device.

For example, the serving network device #1 may configure the second SRS resource for the to-be-positioned terminal device and a first SRS resource for the first reference terminal device in a manner predefined in a protocol, where at least one overlapping time domain unit exists between the first SRS resource and the second SRS resource. For descriptions of the predefined manner, refer to the foregoing descriptions.

For another example, the serving network device #1 may configure the second SRS resource for the to-be-positioned terminal device and a first SRS resource for the first reference terminal device based on an indication of the location management device. In other words, before S920 and S930, the method 900 further includes S921 and/or S922.

S921: The serving network device #1 receives first indication information from the location management device. Correspondingly, the location management device sends the first indication information to the serving network device #1.

For more descriptions of S921, refer to the foregoing descriptions.

After receiving the first indication information, the serving network device #1 configures the SRS resources for the to-be-positioned terminal device and the first reference terminal device based on the first indication information. For example, if the first indication information indicates to configure, for the to-be-positioned terminal device, the second SRS resource that overlaps the first SRS resource in time domain, the second SRS resource configured by the serving network device #1 for the to-be-positioned terminal device overlaps, in time domain, the first SRS resource configured for the first reference terminal device.

S922: The serving network device #1 receives second indication information from the location management device. Correspondingly, the location management device sends the second indication information to the serving network device #1.

For more descriptions of S922, refer to the foregoing descriptions.

After receiving the second indication information, the serving network device #1 configures the SRS resources for the to-be-positioned terminal device and the first reference terminal device based on the second indication information. For example, if offset indicated by the second indication information is 0, no offset by a time domain unit exists between the second SRS resource configured by the serving network device #1 for the to-be-positioned terminal device and the first SRS resource configured for the first reference terminal device.

After the serving network device #1 configures the second SRS resource for the to-be-positioned terminal device, and the serving network device #2 configures the first SRS resource for the first reference terminal device, the to-be-positioned terminal device may send the second SRS signal on the second SRS resource, and the first reference terminal device may send a first SRS signal on the first SRS resource. Further, the network device may position the to-be-positioned terminal device by measuring the first SRS signal and the second SRS signal. For a method for positioning the to-be-positioned terminal device by the network device, refer to the foregoing method 500.

In this embodiment of this application, a serving network device of the to-be-positioned terminal device may configure, for the to-be-positioned terminal device based on protocol predefinition or an indication of the location management device, the second SRS resource that has the at least one overlapping time domain unit with the first SRS resource. Further, when the to-be-positioned terminal device is positioned by measuring the first SRS signal sent by the first reference terminal device on the first SRS resource and the second SRS signal sent by the to-be-positioned terminal device on the second SRS resource, a phase shift existing in phases measured by a same network device on the first SRS resource in time domain and a phase shift existing in phases measured by the same network device on the second SRS resource in time domain are the same or similar. This helps eliminate or reduce an error introduced by the phase shift, and improve positioning accuracy.

FIG. 10 is a schematic flowchart of a resource configuration method according to another embodiment of this application. In the method shown in FIG. 10, a serving network device #1 sends information about a second SRS resource to a location management device, and then the location management device sends the information about the second SRS resource to a serving network device #2, so that the serving network device #2 may configure a first SRS resource for a first reference terminal device based on the information about the second SRS resource. The following describes in detail steps included in the method 1000.

S1010: The serving network device #1 sends resource configuration information of the second SRS resource to a to-be-positioned terminal device. Correspondingly, the to-be-positioned terminal device receives the resource configuration information of the second SRS resource from the serving network device #1.

For descriptions of the resource configuration information of the second SRS resource, refer to S930 in the foregoing method 900.

Optionally, when receiving a positioning information request message from the location management device, the serving network device #1 configures the second SRS resource for the to-be-positioned terminal device, that is, sends the resource configuration information of the second SRS resource to the to-be-positioned terminal device.

S1020: The serving network device #1 sends the information about the second SRS resource to the location management device. Correspondingly, the location management device receives the information about the second SRS resource from the serving network device #1.

For descriptions of the resource configuration information of the second SRS resource, refer to S510 in the foregoing method 500.

Optionally, that the serving network device #1 sends the information about the second SRS resource to the location management device includes: The serving network device #1 sends a positioning information response message to the location management device, where the positioning information response message includes the information about the second SRS resource.

S1030: The location management device sends the information about the second SRS resource to the serving network device #2. Correspondingly, the serving network device #2 receives the information about the second SRS resource from the location management device.

S 1040: The serving network device #2 sends resource configuration information of the first SRS resource to the first reference terminal device. Correspondingly, the first reference terminal device receives the resource configuration information of the first SRS resource from the serving network device #2.

For descriptions of the resource configuration information of the first SRS resource, refer to S940 in the foregoing method 900.

After receiving the information about the second SRS resource, the serving network device #2 configures the second SRS resource for the first reference terminal device based on the information about the second SRS resource. Specifically, the serving network device #2 determines a time domain position of the second SRS resource based on the information about the second SRS resource, and then configures, for the first reference terminal device, the first SRS resource that has at least one overlapping time domain unit with the second SRS resource.

Similar to a manner that is in the method 900 and in which the serving network device #1 configures the second SRS resource for the to-be-positioned terminal device based on the first reference SRS resource information, after the serving network device #2 receives the information about the second SRS resource, the first SRS resource that has the at least one overlapping time domain unit with the second SRS resource may be configured for the first reference terminal device in a manner predefined in a protocol or based on the indication of the location management device. For more descriptions of configuring the first SRS resource by the serving network device #2 for the first reference terminal device, refer to the descriptions of configuring the second SRS resource by the serving network device #1 for the to-be-positioned terminal device in the method 900.

After the serving network device #1 configures the second SRS resource for the to-be-positioned terminal device, and the serving network device #2 configures the first SRS resource for the first reference terminal device, the to-be-positioned terminal device may send a second SRS signal on the second SRS resource, and the first reference terminal device may send a first SRS signal on the first SRS resource. Further, the network device may position the to-be-positioned terminal device by measuring the first SRS signal and the second SRS signal. For a method for positioning the to-be-positioned terminal device by the network device, refer to the foregoing method 500.

In this embodiment of this application, a serving network device of the first reference terminal device may configure, for the first reference terminal device based on protocol predefinition or the indication of the location management device and based on the information # about the second SRS resource, the first SRS resource that has the at least one overlapping time domain unit with the second SRS resource. Further, when the to-be-positioned terminal device is positioned by measuring the first SRS signal sent by the first reference terminal device on the first SRS resource and the second SRS signal sent by the to-be-positioned terminal device on the second SRS resource, a phase shift existing in phases measured by a same network device on the first SRS resource in time domain and a phase shift existing in phases measured by the same network device on the second SRS resource in time domain are the same or similar. This helps eliminate or reduce an error introduced by the phase shift, and improve positioning accuracy.

The methods provided in embodiments of this application are described in detail above with reference to FIG. 3 to FIG. 10. Apparatuses provided in embodiments of this application are described in detail below with reference to FIG. 11 to FIG. 13. It should be understood that descriptions of apparatus embodiments correspond to the descriptions of the method embodiments. Therefore, for content that is not described in detail, refer to the method embodiments. For brevity, details are not described herein again.

FIG. 11 is a block diagram of an apparatus 2000 according to an embodiment of this application. As shown in the figure, the apparatus 2000 may include a transceiver unit 2010 and a processing unit 2020.

In a possible design, the apparatus 2000 may be the location management device in the foregoing method embodiments, or may be a chip configured to implement a function of the location management device in the foregoing method embodiments.

It should be understood that the apparatus 2000 may correspond to the location management device in the method 300, the method 500, the method 900, or the method 1000 in embodiments of this application, or the apparatus 2000 may include a method unit configured to execute the location management device in the method 300 in FIG. 3, the method 500 in FIG. 5, the method 900 in FIG. 9, or the method 1000 in FIG. 10. In addition, units in the apparatus 2000 and the foregoing other operations and/or functions are respectively used to implement corresponding procedures of the method 300 in FIG. 3, the method 500 in FIG. 5, the method 900 in FIG. 9, or the method 1000 in FIG. 10. It should be understood that a specific process in which the units perform the foregoing corresponding steps is described in detail in the foregoing method embodiments. For brevity, details are not described herein.

In another possible design, the apparatus 2000 may be the network device in the foregoing method embodiments, or may be a chip configured to implement a function of the network device in the foregoing method embodiments.

It should be understood that the apparatus 2000 may correspond to the network device #1 in the method 500 in embodiments of this application, or correspond to the serving network device #1 or the serving network device #2 in the method 900 or the method 1000 in embodiments of this application. The apparatus 2000 may include a unit configured to perform a method performed by the network device #1 in the method 500 in FIG. 5, or may include a unit configured to perform a method performed by the serving network device #1 or the serving network device #2 in the method 900 in FIG. 9 or the method 1000 in FIG. 10. In addition, units in the apparatus 2000 and the foregoing other operations and/or functions are respectively used to implement corresponding procedures of the method 500 in FIG. 5, the method 900 in FIG. 9, or the method 1000 in FIG. 10. It should be understood that a specific process in which the units perform the foregoing corresponding steps is described in detail in the foregoing method embodiments. For brevity, details are not described herein.

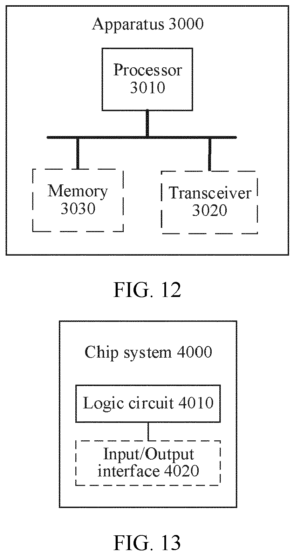

It should be further understood that the transceiver unit 2010 in the apparatus 2000 may correspond to a transceiver 3020 in an apparatus 3000 shown in FIG. 12, and the processing unit 2020 in the apparatus 2000 may correspond to a processor 3010 in the apparatus 3000 shown in FIG. 12.

It should be further understood that when the apparatus 2000 is a chip, the chip includes a transceiver unit and a processing unit. The transceiver unit may be an input/output circuit or a communication interface. The processing unit may be a processor, a microprocessor, or an integrated circuit that is integrated on the chip.

The transceiver unit 2010 is configured to implement signal receiving and sending operations of the apparatus 2000, and the processing unit 2020 is configured to implement a signal processing operation of the apparatus 2000.

Optionally, the apparatus 2000 further includes a storage unit 2030, and the storage unit 2030 is configured to store instructions.

FIG. 12 is a block diagram of an apparatus 3000 according to an embodiment of this application. As shown in FIG. 12, the apparatus 3000 includes at least one processor 3010. The processor 3010 is coupled to a memory, and is configured to execute instructions stored in the memory, to perform the method in FIG. 3, FIG. 5, FIG. 9, or FIG. 10. Optionally, the apparatus 3000 further includes a transceiver 3020. The processor 3010 is coupled to the memory, and is configured to execute the instructions stored in the memory, to control the transceiver 3020 to send a signal and/or receive a signal. For example, the processor 3010 may control the transceiver 3020 to send first reference SRS resource information and/or receive the first reference SRS resource information. Optionally, the apparatus 3000 further includes the memory 3030, configured to store the instructions.

It should be understood that the processor 3010 and the memory 3030 may be integrated into one processing apparatus. The processor 3010 is configured to execute program code stored in the memory 3030 to implement the foregoing functions. During specific implementation, the memory 3030 may alternatively be integrated into the processor 3010, or may be independent of the processor 3010.

It should be further understood that the transceiver 3020 may include a receiver (which is also referred to as a receiver machine) and a transmitter (which is also referred to as a transmitter machine). The transceiver 3020 may further include an antenna, and there may be one or more antennas. The transceiver 3020 may alternatively be a communication interface or an interface circuit.

When the apparatus 3000 is a chip, the chip includes a transceiver unit and a processing unit. The transceiver unit may be an input/output circuit or a communication interface. The processing unit may be a processor, a microprocessor, or an integrated circuit that is integrated on the chip.

FIG. 13 is a diagram of a chip system according to an embodiment of this application. The chip system herein may also be a system including a circuit. The chip system 4000 shown in FIG. 13 includes a logic circuit 4010 and an input/output interface (input/output interface) 4020. The logic circuit is configured to: be coupled to an input interface, and perform transmission of data (for example, first information) through the input/output interface, to perform the method in FIG. 3, FIG. 5, FIG. 9, or FIG. 10.

An embodiment of this application further provides a processing apparatus, including a processor and an interface. The processor may be configured to perform the methods in the foregoing method embodiments.

It should be understood that the processing apparatus may be a chip. For example, the processing apparatus may be a field programmable gate array (field programmable gate array, FPGA), an application-specific integrated circuit (application-specific integrated circuit, ASIC), a system-on-chip (system-on-chip, SoC), a central processing unit (central processing unit, CPU), a network processor (network processor, NP), a digital signal processor (digital signal processor, DSP), a microcontroller unit (microcontroller unit, MCU), a programmable logic device (programmable logic device, PLD), or another integrated chip.

In an implementation process, steps in the foregoing methods may be implemented through a hardware integrated logic circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in a memory, and the processor reads information in the memory and completes the steps in the foregoing methods in combination with the hardware in the processor. To avoid repetition, details are not described herein again.

It should be noted that, the processor in embodiments of this application may be an integrated circuit chip, and has a signal processing capability. In an implementation process, the steps in the foregoing method embodiments may be implemented through the hardware integrated logic circuit in the processor, or by using the instructions in the form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like.

It may be understood that the memory in this embodiment of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache.

According to the method provided in embodiments of this application, this application further provides a computer program product. The computer program product includes computer program code. When the computer program code is run on a computer, the computer is enabled to perform the method in the embodiment shown in FIG. 3, FIG. 5, FIG. 9, or FIG. 10.

According to the method provided in embodiments of this application, this application further provides a computer-readable medium. The computer-readable medium stores program code. When the program code is run on a computer, the computer is enabled to perform the method in the embodiment shown in FIG. 3, FIG. 5, FIG. 9, or FIG. 10.

According to the method provided in embodiments of this application, this application further provides a system. The system includes the foregoing network device, location management device, and terminal device.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer instructions are loaded and executed on the computer, the procedure or functions according to embodiments of this application are all or partially generated. The computer instructions may be stored in a computer-readable storage medium, or transmitted from one computer-readable storage medium to another computer-readable storage medium. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state disk (solid-state disk, SSD)), or the like.

In several embodiments provided in this application, it should be understood that the disclosed system, apparatus, and method may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or another form.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A resource configuration method, comprising:

    receiving, by a network device, first reference sounding reference signal SRS resource information from a location management device; and
    configuring, by the network device, a second SRS resource for a to-be-positioned terminal device based on the first reference SRS resource information, wherein at least one overlapping time domain unit exists between the second SRS resource and a first SRS resource, and the first reference SRS resource information is related to the first SRS resource.

2.  The method according to claim 1, wherein the first reference SRS resource information comprises one or more of the following: a start symbol location, a quantity of occupied symbols, a sending periodicity and offset, a transmission comb and offset, a cyclic shift, a frequency domain position and offset, or a frequency hopping configuration.

3.  The method according to claim 2, wherein the first reference SRS resource information comprises at least the start symbol location, the quantity of occupied symbols, and the sending periodicity and the offset.

4.  The method according to claim 1, wherein the first reference SRS resource information comprises identification information of the first SRS resource.

5.  The method according to any one of claims 1 to 4, wherein the first reference SRS resource information is related to an SRS resource of at least one reference terminal device.

6.  The method according to claim 5, wherein the first reference SRS resource information is related to an SRS resource of a first reference terminal device, and the first reference SRS resource information is information about the SRS resource of the first reference terminal device, or the first reference SRS resource information is information obtained based on the SRS resource of the first reference terminal device.

7.  The method according to claim 5, wherein the first reference SRS resource information is related to SRS resources of at least two reference terminal devices, and the first reference SRS resource information is information about the SRS resources of the at least two reference terminal devices, or the first reference SRS resource information is information obtained based on the SRS resources of the at least two reference terminal devices.

8.  The method according to any one of claims 1 to 7, wherein the receiving, by a network device, first reference SRS resource information from a location management device comprises:

receiving, by the network device, a plurality of pieces of reference SRS resource information and priority information of each of the plurality of pieces of reference SRS resource information from the location management device, wherein the plurality of pieces of reference SRS resource information comprise the first reference SRS resource information; and
the method further comprises:
sending, by the network device, information about the second SRS resource to the location management device.

9. The method according to any one of claims 1 to 8, wherein the method further comprises:

receiving, by the network device, first indication information from the location management device, wherein the first indication information indicates to configure, for the to-be-positioned terminal device, the second SRS resource that completely overlaps the first SRS resource in time domain, or indicates to configure, for the to-be-positioned terminal device, the second SRS resource that partially overlaps the first SRS resource in time domain, wherein the first reference SRS resource information is related to the first SRS resource; and
the configuring, by the network device, a second SRS resource for a to-be-positioned terminal device based on the first reference SRS resource information comprises:
configuring, by the network device, the second SRS resource for the to-be-positioned terminal device based on the first reference SRS resource information and the first indication information.

10. The method according to any one of claims 1 to 9, wherein the method further comprises:

receiving, by the network device, second indication information from the location management device, wherein the second indication information indicates offset between the first SRS resource and the second SRS resource, and the first reference SRS resource information is related to the first SRS resource; and
the configuring, by the network device, a second SRS resource for a to-be-positioned terminal device based on the first reference SRS resource information comprises:
configuring, by the network device, the second SRS resource for the to-be-positioned terminal device based on the first reference SRS resource information and the second indication information.

11. The method according to any one of claims 1 to 10, wherein the method further comprises:
receiving, by the network device, third indication information from the location management device, wherein the third indication information indicates that the first SRS resource is a reference resource, and the first reference SRS resource information is related to the first SRS resource.

12. The method according to any one of claims 1 to 11, wherein the receiving, by a network device, first reference SRS resource information from a location management device comprises:
receiving, by the network device, reference resource information from the location management device, wherein the reference resource information comprises the first reference SRS resource information.

13. A resource configuration method, comprising:

sending, by a location management device, first reference sounding reference signal SRS resource information to a network device, wherein the first reference SRS resource information is used by the network device to configure a second SRS resource for a to-be-positioned terminal device; and
receiving, by the location management device, information about the second SRS resource from the network device, wherein at least one overlapping time domain unit exists between the second SRS resource and a first SRS resource, and the first reference SRS resource information is related to the first SRS resource.

14. The method according to claim 13, wherein the first reference SRS resource information comprises one or more of the following: a start symbol location, a quantity of occupied symbols, a sending periodicity and offset, a transmission comb and offset, a cyclic shift, a frequency domain position and offset, or a frequency hopping configuration.

15. The method according to claim 14, wherein the first reference SRS resource information comprises at least the start symbol location, the quantity of occupied symbols, and the sending periodicity and the offset.

16. The method according to claim 13, wherein the first reference SRS resource information comprises identification information of the first SRS resource.

17. The method according to any one of claims 13 to 16, wherein the first reference SRS resource information is related to an SRS resource of at least one reference terminal device.

18. The method according to claim 17, wherein the first reference SRS resource information is related to an SRS resource of a first reference terminal device, and the first reference SRS resource information is information about the SRS resource of the first reference terminal device, or the first reference SRS resource information is information obtained based on the SRS resource of the first reference terminal device.

19. The method according to claim 17, wherein the first reference SRS resource information is related to SRS resources of at least two reference terminal devices, and the first reference SRS resource information is information about the SRS resources of the at least two reference terminal devices, or the first reference SRS resource information is information obtained based on the SRS resources of the at least two reference terminal devices.

20. The method according to any one of claims 13 to 19, wherein the sending, by a location management device, first reference SRS resource information to a network device comprises:
sending, by the location management device, a plurality of pieces of reference SRS resource information and priority information of each of the plurality of pieces of reference SRS resource information to the network device, wherein the plurality of pieces of reference SRS resource information comprise the first reference SRS resource information.

21. The method according to any one of claims 13 to 20, wherein the method further comprises:
sending, by the location management device, first indication information to the network device, wherein the first indication information indicates to configure, for the to-be-positioned terminal device, the second SRS resource that completely overlaps the first SRS resource in time domain, or indicates to configure, for the to-be-positioned terminal device, the second SRS resource that partially overlaps the first SRS resource in time domain, wherein the first reference SRS resource information is related to the first SRS resource.

22. The method according to any one of claims 13 to 21, wherein the method further comprises:
sending, by the location management device, second indication information to the network device, wherein the second indication information indicates offset between the first SRS resource and the second SRS resource, and the first reference SRS resource information is related to the first SRS resource.

23. The method according to any one of claims 13 to 22, wherein the method further comprises:
sending, by the location management device, third indication information to the network device, wherein the third indication information indicates that the first SRS resource is a reference resource, and the first reference SRS resource information is related to the first SRS resource.

24. The method according to any one of claims 13 to 23, wherein the sending, by a location management device, first reference SRS resource information to a network device comprises:
sending, by the location management device, reference resource information to the network device, wherein the reference resource information comprises the first reference SRS resource information.

25. A communication apparatus, comprising at least one processor, wherein the at least one processor is configured to: be coupled to a memory, and read and execute instructions in the memory, to implement the method according to any one of claims 1 to 12.

26. The communication apparatus according to claim 25, further comprising the memory.

27. A communication apparatus, comprising at least one processor, wherein the at least one processor is configured to: be coupled to a memory, and read and execute instructions in the memory, to implement the method according to any one of claims 13 to 24.

28. The communication apparatus according to claim 27, further comprising the memory.

29. A computer-readable storage medium, wherein the computer-readable storage medium stores a computer program; and when the computer program is executed, the method according to any one of claims 1 to 24 is performed.

30. A system, comprising the apparatus according to claim 25 or 26 and further comprising the apparatus according to claim 27 or 28.

FIG. 1

FIG. 2

S310: A location management device receives positioning information, where the positioning information is for determining a first measurement TDOA and a second measurement TDOA, the first measurement TDOA is a difference between time at which a signal sent by a to-be-positioned terminal device arrives at a first location measurement device and a second location measurement device, and the second measurement TDOA is a difference between time at which a signal sent by a reference device arrives at the first location measurement device and the second location measurement device

S320: The location management device determines a second theoretical TDOA based on a first theoretical TDOA and a difference between the first measurement TDOA and the second measurement TODA, where the first theoretical TDOA is a theoretical difference between the time at which the signal sent by the reference device arrives at the first location measurement device and the second location measurement device, and the second theoretical TDOA is a theoretical difference between the time at which the signal sent by the to-be-positioned terminal device arrives at the first location measurement device and the second location measurement device

S330: The location management device positions the to-be-positioned terminal device based on the second theoretical TDOA

FIG. 3

BS 1

SRS

Hyperbola 2

UE

UE_r

Hyperbola 1

SRS

SRS

BS 2

BS 3

FIG. 4

Method 500

FIG. 5

First SRS resource   Second SRS resource

(a)        (b)        (c)

FIG. 6

First SRS resource    Second SRS resource

FIG. 7

First SRS resource    Second SRS resource

Subcarrier

(a)

(b)

FIG. 8

Method 900

| First reference terminal device | To-be-positioned terminal device | Serving network device #1 | Location management device | Serving network device #2 |
|---|---|---|---|---|

S910: First reference SRS resource information

S921: First indication information

S922: Second indication information

S920: Resource configuration information of a second SRS resource

S923: Information about the second SRS resource

S930: Resource configuration information of a first SRS resource

FIG. 9

Method 1000

| First reference terminal device | To-be-positioned terminal device | Serving network device #1 | Location management device | Serving network device #2 |

S1010: Resource configuration information of a second SRS resource

S1020: Information about the second SRS resource

S1030: Information about the second SRS resource

S1040: Resource configuration information of a first SRS resource

FIG. 10

Apparatus 2000

Transceiver unit 2010

Processing unit 2020

Storage unit 2030

FIG. 11

Apparatus 3000

Processor
3010

Memory
3030

Transceiver
3020

FIG. 12

Chip system 4000

Logic circuit 4010

Input/Output
interface 4020

FIG. 13

<div style="text-align: center;">

**INTERNATIONAL SEARCH REPORT**

</div>

| International application No. |
| --- |
| **PCT/CN2023/093026** |

| **A.** | **CLASSIFICATION OF SUBJECT MATTER** |
| --- | --- |
| | H04W72/04(2023.01)i |

According to International Patent Classification (IPC) or to both national classification and IPC

| **B.** | **FIELDS SEARCHED** |
| --- | --- |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS, CNTXT, VEN, EPTXT, USTXT, WOTXT, CNKI, 3GPP: 部分, 参考, 探测参考信号, 设备, 终端, 定位, 偏移, 漂移, 时域, 误差, 相位, 重叠, 资源, LMF, reference, signal, overlap, SRS, time, phase drift, shift, resource, position

| **C.** | **DOCUMENTS CONSIDERED TO BE RELEVANT** | |
| --- | --- | --- |

| Category* | Citation of document, with indication, where appropriate, of the relevant passages | Relevant to claim No. |
| --- | --- | --- |
| A | CN 113950068 A (HUAWEI TECHNOLOGIES CO., LTD.) 18 January 2022 (2022-01-18) description, paragraphs [0094]-[0213] | 1-30 |
| A | EP 3700099 A1 (QUALCOMM INC.) 26 August 2020 (2020-08-26) entire document | 1-30 |
| A | WO 2020107155 A1 (HUAWEI TECHNOLOGIES CO., LTD.) 04 June 2020 (2020-06-04) entire document | 1-30 |
| A | WO 2021155550 A1 (HUAWEI TECHNOLOGIES CO., LTD.) 12 August 2021 (2021-08-12) entire document | 1-30 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **06 July 2023** | **26 July 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/093026**

| Patent document cited in search report | | | Publication date (day/month/year) | Patent family member(s) | | | Publication date (day/month/year) |
|---|---|---|---|---|---|---|---|
| CN | 113950068 | A | 18 January 2022 | WO | 2022012549 | A1 | 20 January 2022 |
| EP | 3700099 | A1 | 26 August 2020 | WO | 2016148795 | A1 | 22 September 2016 |
| | | | | US | 2018069673 | A1 | 08 March 2018 |
| | | | | US | 10389503 | B2 | 20 August 2019 |
| | | | | AU | 2020202824 | A1 | 21 May 2020 |
| | | | | AU | 2020202824 | B2 | 16 December 2021 |
| | | | | US | 2016269157 | A1 | 15 September 2016 |
| | | | | US | 9847862 | B2 | 19 December 2017 |
| | | | | KR | 20170128292 | A | 22 November 2017 |
| | | | | BR | 112017019622 | A2 | 15 May 2018 |
| | | | | AU | 2020202822 | A1 | 21 May 2020 |
| | | | | AU | 2020202822 | B2 | 13 January 2022 |
| | | | | JP | 2018512787 | A | 17 May 2018 |
| | | | | JP | 6686037 | B2 | 22 April 2020 |
| | | | | JP | 2020115662 | A | 30 July 2020 |
| | | | | JP | 7175934 | B2 | 21 November 2022 |
| | | | | US | 2019363853 | A1 | 28 November 2019 |
| | | | | US | 11374711 | B2 | 28 June 2022 |
| | | | | EP | 3272021 | A1 | 24 January 2018 |
| | | | | EP | 3272021 | B1 | 13 May 2020 |
| | | | | ES | 2811998 | T3 | 15 March 2021 |
| | | | | HUE | 050615 | T2 | 28 December 2020 |
| | | | | US | 2022263625 | A1 | 18 August 2022 |
| | | | | AU | 2016233882 | A1 | 17 August 2017 |
| | | | | AU | 2016233882 | B2 | 11 June 2020 |
| | | | | TW | 201637476 | A | 16 October 2016 |
| WO | 2020107155 | A1 | 04 June 2020 | EP | 3869881 | A1 | 25 August 2021 |
| WO | 2021155550 | A1 | 12 August 2021 | JP | 2023512544 | A | 27 March 2023 |
| | | | | EP | 4090118 | A1 | 16 November 2022 |
| | | | | EP | 4090118 | A4 | 04 January 2023 |
| | | | | KR | 20220137063 | A | 11 October 2022 |
| | | | | US | 2022376865 | A1 | 24 November 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210588541